# EUROPEAN PATENT APPLICATION

(11) **EP 4 400 381 A1**
(43) Date of publication of application: **17.07.2024**
(21) Application number: 21960264.6
(22) Date of filing: 15.10.2021
(51) Int. Cl.: B60W 50/08, G06F 9/451, B60R 16/037

(54) **DISPLAY METHOD, DISPLAY DEVICE, STEERING WHEEL, AND VEHICLE**

(71) Applicant: Huawei Technologies Co., Ltd., Shenzhen, Guangdong 518129 (CN)
(72) Inventor: WANG, Yi, Shenzhen, Guangdong 518129 (CN); WANG, Peizhi, Shenzhen, Guangdong 518129 (CN); ZHENG, Minghui, Shenzhen, Guangdong 518129 (CN)
(74) Representative: MERH-IP Matias Erny Reichl Hoffmann Patentanwälte PartG mbB
(86) International application number: PCT/CN2021/123967
(87) International publication number: WO 2023/060528

(57) **Abstract**

Embodiments of this application provide a display method, a display apparatus, a steering wheel, and a vehicle. The display method, the display apparatus, and the steering wheel provided in embodiments of this application are applicable to an intelligent vehicle, a new energy vehicle, and the like. The steering wheel includes a steering wheel body and a touch unit. The touch unit is mounted on the steering wheel body by using a mounting part. The display method, the display apparatus, the steering wheel, and the vehicle provided in this application can provide a user with abundant and personalized operation interfaces, and provide an adaptive switching function, to provide a most convenient operation interface for the user at any time. This not only ensures driving safety and collision safety, but also improves user operation efficiency, reduces a misoperation risk, and meets diversified and personalized requirements and scenario requirements.

## Description

### TECHNICAL FIELD

This application relates to the automobile field, and in particular, to a display method, a display device, a steering wheel, and a vehicle.

### BACKGROUND

A steering wheel is one of the important components of an automobile. By controlling the steering wheel, a driver can control a driving direction of the automobile. As automobile technologies develop, diversified control requirements for a vehicle-mounted device are increasingly high, and more functions are integrated into the steering wheel. Corresponding function buttons are disposed on a steering wheel rim and a steering wheel spoke, and a multi-function steering wheel emerges. Functions of common buttons on the multi-function steering wheel include: Bluetooth call on/off, multimedia control, cruise control on/off and setting, voice assistant wakeup, voice control and adjustment, instrument control/electronic control unit control, lane keeping/lane departure alerting control, a customized function button, and the like. Nowadays, the automobile has more functions, but space for disposing function buttons on the steering wheel is limited. Therefore, it is difficult to dispose physical buttons for all functions. In addition, vehicles of different models may further have different quantities or types of functions, and therefore, it is difficult to flexibly adjust types, quantities, and location layouts of function buttons on steering wheels.

### SUMMARY

This application provides a steering wheel, an electronic device, a vehicle, and a control method. The steering wheel provided in this application can provide a user with an abundant control menu, and has an adaptive switching function, and provides a most convenient operation entry for the user at any time.

A first aspect of this application provides a method for displaying a vehicle operation interface. In a first possible implementation of the first aspect, the method includes: obtaining status information, where the status information includes environment information; obtaining a first scenario based on the status information; obtaining a first operation interface that matches the first scenario; and displaying the first operation interface.

Optionally, according to the display method provided in this application, the operation interface may be updated when an environment, a vehicle status, or the like changes, so that a complex operation of searching for a specific button or a function entry by a user is simplified, and an adaptive switching function of the operation interface is provided for the user. In different environments, a user's requirement for an operation may change. Diversified operation interfaces and an adaptive interface adjustment mechanism are provided, so that the user may obtain an operation interface that is more suitable for the user's requirement.

Optionally, a current scenario may be obtained based on the environment information. Optionally, a current scenario may be obtained based on vehicle information. Introduction of scenarios facilitates unified management and recommendation of a same sub-scenario type. For example, in different related scenarios of a unified scenario type, different operation interfaces with correlation may be displayed. In this way, efficiency of selecting the operation interface by the user can be improved, a success rate of recommending the operation interface can be improved, and time for the user to search for a specific operation interface can be reduced. In addition, by introducing the scenario, a possibility of high-frequency switching of the operation interface caused by a change of input information (for example, vehicle status information and/or environment information) can be reduced, interference to the user is reduced, and driving confidence of the user is improved.

According to the first possible implementation of the first aspect, in a second possible implementation, the method further includes: obtaining user identity information; and obtaining user setting information based on the user identity information, where the user setting information includes at least one scenario, at least one operation interface, and information about a correspondence between the scenario and the operation interface. The obtaining a first operation interface that matches the first scenario specifically includes: obtaining, based on the user setting information, the first operation interface that matches the first scenario.

According to the second possible implementation of the first aspect, in a third possible implementation, the method further includes: obtaining a first user instruction, where the first user instruction instructs to select the first operation interface as an operation interface that matches the first scenario; and if the first operation interface is different from a second operation interface, updating the user setting information, where the second operation interface is an operation interface that is in the user setting information and that matches the first scenario currently.

Optionally, in the method provided in the first aspect of this application, the operation interface may be further switched based on selection of the user. In this way, the user can more flexibly control switching of the operation interface. If the user wants to return to a previous operation interface, the user can tap one button to return to the previous operation interface. In addition, this also provides a possibility of introducing a manual correction option when the operation interface is incorrectly switched.

Optionally, in the display method provided in this application, the operation interface may be further displayed based on a user identity. This provides more types of selection for the user to customize settings. In this way, a problem that a quantity of control buttons of the steering wheel is limited or a layout location is fixed and cannot be changed can be effectively resolved on a premise that the steering wheel has limited arrangement space.

Optionally, a preset scenario may be customized by the user, or may be preset by a system.

Optionally, the operation interface may be customized by the user, or may be preset by a system.

Optionally, a correspondence between the preset scenario and the operation interface may be customized by the user, or may be preset by a system. Based on the user setting information, more personalized experience may be provided for the user, and more flexible operation experience may be provided for the user. The user may set an operation interface in a specific scenario based on a preference, to implement more efficient control on a vehicle or a vehicle-mounted device. The user setting information is updated. When setting of the operation interface by the user changes, latest setting of the user may be recorded, to provide an updated operation interface next time. This improves user experience.

Optionally, when a vehicle incorrectly recognizes a scenario, manual correction may be performed. In a possible implementation, after the obtaining a first scenario based on the status information, the method further includes: obtaining a second user instruction, where the second user instruction instructs whether to switch to the first scenario; if the second user instruction instructs to switch to the first scenario, obtaining the first operation interface that matches the first scenario, or if the second user instruction instructs not to switch to the first scenario, obtaining a third user instruction, where the third user instruction instructs to switch to a second scenario; obtaining the second operation interface that matches the second scenario; and displaying the second operation interface.

According to the first to the third possible implementations of the first aspect, in a fourth possible implementation, the environment information includes at least one of the following: location information, road information, weather information, and accident information.

Optionally, the environment information may include information in a plurality of dimensions, for example, location information, road information, weather information, and accident information. When the environment information changes, a more suitable operation interface may be provided, so that time for the user to search for a specific function operation button is reduced, and efficiency of performing a proper action by the user is improved. This effectively improves driving experience and driving safety.

According to the first to the fourth possible implementations of the first aspect, in a fifth possible implementation, the status information further includes vehicle information, where the vehicle information includes at least one of the following: driving status information and use status information. The driving status information includes at least one of the following: driving mode information, gear information, motion status information, drive system status information, energy system status information, lighting system status information, and vehicle fault information. The use status information includes at least one of the following: call status information, screen brightness, speaker volume, a temperature adjustment mode, an air circulation mode, a seat status, a window status, and an atmosphere light status.

Through abundant information inputs, an operation interface that is more suitable for a current operation requirement may be provided for the user. Optionally, an input source of the information may be the vehicle status information, and an available operation interface is provided for the user by fully considering a function and a status of the vehicle. Optionally, an input source of the information may be information outside the vehicle, and optimal operation interfaces in different environments may be provided for the user by fully considering environment information outside the vehicle. In this way, diversity and flexibility of display of the operation interface can be improved, and better operation experience can be brought to the user.

According to the first to the fifth possible implementations of the first aspect, in a sixth possible implementation, after the obtaining a first scenario based on the status information, the method further includes: obtaining, based on the first scenario, a feedback mode that matches the first scenario. The feedback mode includes a feedback manner and a feedback intensity. The feedback manner includes at least one of the following: a vibration feedback, a sound feedback, and a brightness feedback. The feedback intensity includes at least one of the following: a vibration amplitude, a vibration frequency, volume, and brightness.

In this case, the feedback can be provided based on a user operation. Through a vibration, sound, and picture feedback, operation experience of the user can be improved, and a more real touch, sound, and picture can be brought to the user. In addition, by adaptively adjusting the feedback intensity and the feedback manner, a probability of a misoperation can be effectively reduced, and driving safety can be improved.

According to the first to the sixth possible implementations of the first aspect, in a seventh possible implementation, the vehicle displays the first operation interface by using the steering wheel, and the method further includes: obtaining a steering wheel angle; and adjusting a display angle of the first operation interface based on the steering wheel angle.

In this way, the user may be provided with a picture operation angle that is more suitable for different steering wheel angles. When a steering wheel angle is not zero, an operation interface that is more convenient for identification and operation may be provided for the user.

According to the first to the seventh possible implementations of the first aspect, in an eighth possible implementation, the vehicle includes a first display apparatus and a second display apparatus, and the first operation interface includes a first sub-interface and a second sub-interface. The displaying the first operation interface specifically includes: displaying the first sub-interface by using the first display apparatus, and displaying the second sub-interface by using the second display apparatus.

Optionally, the display method provided in this application may be applied to a steering wheel including at least one operation unit. For example, the steering wheel may include a first operation unit and a second operation unit. When there are a plurality of operation units, a plurality of same or different operation interfaces may be simultaneously displayed, to provide better operation experience for the user. It should be noted that, a collision safety requirement of the vehicle needs to be considered in an arrangement manner of the operation unit.

A second aspect of this application provides an apparatus for displaying a vehicle operation interface. In a first possible implementation, the apparatus includes: an obtaining unit, where the obtaining unit is configured to obtain status information, and the status information includes environment information; a processing unit, where the processing unit is configured to obtain a first scenario based on the status information, and the processing unit is further configured to obtain a first operation interface that matches the first scenario; and a display unit, where the display unit is configured to display the first operation interface.

Optionally, according to the display apparatus provided in this application, the operation interface may be updated when an environment, a vehicle status, or the like changes, so that a complex operation of searching for a specific button or a function entry by a user is simplified, and an adaptive switching function of the operation interface is provided for the user. In different environments, a user's requirement for an operation may change. Diversified operation interfaces and an adaptive interface adjustment mechanism are provided, so that the user may obtain an operation interface that is more suitable for the user's requirement.

Optionally, current scenario information may be obtained based on the environment information and/or vehicle status information. Introduction of the scenario information facilitates unified management and recommendation of a same sub-scenario type. For example, in different related scenarios of a unified scenario type, different operation interfaces with correlation may be displayed. In this way, efficiency of selecting the operation interface by the user can be improved, a success rate of recommending the operation interface can be improved, and time for the user to search for a specific operation interface can be reduced. In addition, by introducing a scenario, a possibility of high-frequency switching of the operation interface caused by a change of input information (for example, the vehicle status information and/or environment information) can be reduced, interference to the user is reduced, and driving confidence of the user is improved.

According to the first possible implementation of the second aspect, in a second possible implementation, the apparatus includes: an identity information obtaining unit, where the identity information obtaining unit is configured to obtain user identity information. The processing unit is further configured to obtain user setting information based on the user identity information, where the user setting information includes at least one scenario, at least one operation interface, and information about a correspondence between the scenario and the operation interface. The processing unit is further configured to obtain, based on the user setting information, the first operation interface that matches the first scenario.

Optionally, the display apparatus provided in the second aspect of this application may further switch the operation interface based on selection of the user. In this way, the user can more flexibly control switching of the operation interface. If the user wants to return to a previous operation interface, the user can tap one button to return to the previous operation interface. In addition, this also provides a possibility of introducing a manual correction option when the operation interface is incorrectly switched.

Optionally, the display apparatus provided in this application may further display the operation interface based on a user identity. This provides more types of selection for the user to customize settings. In this way, a problem that a quantity of control buttons of the steering wheel is limited or a layout location is fixed and cannot be changed can be effectively resolved on a premise that the steering wheel has limited arrangement space.

Optionally, a preset scenario may be customized by the user, or may be preset by a system.

Optionally, the operation interface may be customized by the user, or may be preset by a system.

Optionally, a correspondence between a preset scenario and the operation interface may be customized by the user, or may be preset by a system. Based on the user setting information, more personalized experience may be provided for the user, and more flexible operation experience may be provided for the user. The user may set an operation interface in a specific scenario based on a preference, to implement more efficient control on a vehicle or a vehicle-mounted device. The user setting information is updated. When setting of the operation interface by the user changes, latest setting of the user may be recorded, to provide an updated operation interface next time. This improves user experience.

Optionally, when a vehicle incorrectly recognizes a scenario, manual correction may be performed. In a possible implementation, after obtaining the first scenario based on the status information, the method further includes: obtaining a second user instruction, where the second user instruction instructs whether to switch to the first scenario; if the second user instruction instructs to switch to the first scenario, obtaining the first operation interface that matches the first scenario, or if the second user instruction instructs not to switch to the first scenario, obtaining a third user instruction, where the third user instruction instructs to switch to a second scenario; obtaining the second operation interface that matches the second scenario; and displaying the second operation interface.

According to the second possible implementation of the second aspect, in a third possible implementation, the apparatus includes: a receiving unit, configured to obtain a first user instruction, where the first user instruction instructs to select the first operation interface as an operation interface that matches the first scenario. The processing unit is further configured to update the user setting information when the first operation interface is different from a second operation interface. The second operation interface is an operation interface that is in the user setting information and that matches the first scenario currently.

According to the first to the third possible implementations of the second aspect, in a fourth possible implementation, the environment information includes at least one of the following: location information, road information, weather information, and accident information.

Optionally, the environment information may include information in a plurality of dimensions, for example, location information, road information, weather information, and accident information. When the environment information changes, a more suitable operation interface may be provided, so that time for the user to search for a specific function operation button is reduced, and efficiency of performing a proper action by the user is improved. This effectively improves driving experience and driving safety.

According to the first to the fourth possible implementations of the second aspect, in a fifth possible implementation, the status information further includes vehicle information, where the vehicle information includes at least one of the following: driving status information and use status information. The driving status information includes at least one of the following: driving mode information, gear information, motion status information, drive system status information, energy system status information, lighting system status information, and vehicle fault information. The use status information includes at least one of the following: call status information, screen brightness, speaker volume, a temperature adjustment mode, an air circulation mode, a seat status, a window status, and an atmosphere light status.

Through abundant information inputs, an operation interface that is more suitable for a current operation requirement may be provided for the user. Optionally, an input source of the information may be the vehicle status information, and an available operation interface is provided for the user by fully considering a function and a status of the vehicle. Optionally, an input source of the information may be information outside the vehicle, and optimal operation interfaces in different environments may be provided for the user by fully considering environment information outside the vehicle. In this way, diversity and flexibility of display of the operation interface can be improved, and better operation experience can be brought to the user.

According to the first to the fifth possible implementations of the second aspect, in a sixth possible implementation, the processing unit is further configured to obtain, based on the first scenario, a feedback mode that matches the first scenario. The feedback mode includes a feedback manner and a feedback intensity. The feedback manner includes at least one of the following: a vibration feedback, a sound feedback, and a brightness feedback. The feedback intensity includes at least one of the following: a vibration amplitude, a vibration frequency, volume, and brightness.

In this case, the feedback can be provided based on a user operation. Through a vibration, sound, and picture feedback, operation experience of the user can be improved, and a more real touch, sound, and picture can be brought to the user. In addition, by adaptively adjusting the feedback intensity and the feedback manner, a probability of a misoperation can be effectively reduced, and driving safety can be improved.

According to the first to the sixth possible implementations of the second aspect, in a seventh possible implementation, a vehicle displays the first operation interface by using a steering wheel, and the obtaining unit is further configured to obtain a steering wheel angle. The processing unit is further configured to adjust a display angle of the first operation interface based on the steering wheel angle.

In this way, the user may be provided with a picture operation angle that is more suitable for different steering wheel angles. When a steering wheel angle is not zero, an operation interface that is more convenient for identification and operation may be provided for the user.

According to the first to the seventh possible implementations of the second aspect, in an eighth possible implementation, the display unit includes a first display subunit and a second display subunit, and the first operation interface includes a first sub-interface and a second sub-interface. The first display subunit is configured to display the first sub-interface, and the second display subunit is configured to display the second sub-interface.

Optionally, the display method provided in this application may be applied to a steering wheel including at least one operation unit. For example, the steering wheel may include a first operation unit and a second operation unit. When there are a plurality of operation units, a plurality of same or different operation interfaces may be simultaneously displayed, to provide better operation experience for the user. It should be noted that, a collision safety requirement of the vehicle needs to be considered in an arrangement manner of the operation unit.

A third aspect of this application provides a steering wheel. In a first possible implementation of the third aspect, the steering wheel includes:
a first operation unit, configured to display an operation interface and receive a user instruction, where the operation interface is obtained based on status information, and the status information includes environment information; and
a first mounting part, where the first operation unit is detachably mounted on the first mounting part.

Optionally, the environment information includes at least one of the following: location information, road information, weather information, and accident information.

Optionally, the operation interface may also be obtained based on vehicle information. The vehicle information includes at least one of the following: driving status information and use status information. The driving status information includes at least one of the following: driving mode information, gear information, motion status information, drive system status information, energy system status information, lighting system status information, and vehicle fault information. The use status information includes at least one of the following: call status information, screen brightness, speaker volume, a temperature adjustment mode, an air circulation mode, a seat status, a window status, and an atmosphere light status.

Optionally, the operation interface may also be obtained based on user setting information. The user setting information may be obtained based on user identity information, where the user setting information includes at least one scenario, at least one operation interface, and information about a correspondence between the scenario and the operation interface. A first operation interface that matches a first scenario is obtained based on the user setting information.

Optionally, in the steering wheel provided in the third aspect of this application, the first operation unit may be detachably connected to the steering wheel. This facilitates upgrade of the first operation unit. Considering that an update speed of a vehicle is continuously accelerated, to better match a continuously upgraded function requirement of a user, the first operation unit may be separately replaced, to ensure that the vehicle can conveniently update hardware.

Optionally, in a possible implementation, the first operation unit may be integrated with the steering wheel. The first operation unit and the steering wheel are integrated. This helps reduce costs, improve reliability, and reduce a security risk during a collision.

With reference to the first possible implementation of the third aspect, in a second possible implementation, the first operation unit is mounted on the first mounting part in a magnetically-fixed manner.

Optionally, in the steering wheel provided in this application, the first operation unit may be connected to the steering wheel body through magnetic attraction. A magnetic attraction connection can improve reliability of a connection between the first operation unit and the steering wheel. In addition, the magnetic connection is also convenient for disassembly and positioning. During mounting, the magnetic attraction may further provide guidance for the mounting, so that a user can mount the first operation unit on the steering wheel. When the first operation unit is placed at a location close to a mounting point, a magnetic attraction part may align the first operation unit with the steering wheel through attraction, to facilitate alignment and mounting.

According to the first and the second possible implementations of the third aspect, in a third possible implementation, the first operation unit further includes a first connection part, the first mounting part further includes a second connection part, and the first operation unit is fastened to the first connection part by using the first connection part and the second connection part.

Optionally, the connection part may be a snap-fit connection part. A snap-fit connection may effectively improve reliability of a connection between the first operation unit and the steering wheel. When the first operation unit is mounted on the steering wheel and is in a locked state, damage caused by falling off or splashing of the first operation unit or a part of the first operation unit to a passenger during a vehicle collision can be effectively prevented, and passenger safety during the vehicle collision can be improved.

According to the first to the third possible implementations of the third aspect, in a fourth possible implementation, the first operation unit includes a wireless charging receive end, the first mounting part includes a wireless charging transmit end, and the first mounting part supplies power to the first operation unit via the wireless charging transmit end and the wireless charging receive end.

Optionally, in the steering wheel provided in this application, the first operation unit may be wirelessly powered by the steering wheel. Wireless power supply may reduce hardware interfaces, and effectively improve dustproof and waterproof capabilities of the first operation unit. In addition, convenience of disassembling and assembling the first operation unit can be improved.

Optionally, in a possible implementation, the steering wheel may supply power to the first operation unit in a wired connection manner. When the wired connection manner is used for power supply, stability of power supply transmission can be improved. When the first operation unit and the steering wheel are integrated, a system structure may be simplified, and reliability may be improved.

According to the first to the fourth possible implementations of the third aspect, in a fifth possible implementation, the steering wheel includes a first interface, and the first operation unit establishes a communication connection to the steering wheel through the first interface.

According to the first to the fourth possible implementations of the third aspect, in a sixth possible implementation, the first operation unit further includes a wireless communication unit. The wireless communication unit is configured to establish a wireless communication connection to a vehicle-mounted device of a vehicle.

Optionally, the steering wheel provided in this application may establish a communication connection to the first operation unit in a wired or wireless manner. The wireless manner is used to perform a communication connection, so that a hardware interface can be simplified, and it is convenient for the first operation unit to establish a wireless communication connection to any on-board unit. The wired manner is used to perform a communication connection, so that stability of the communication connection can be improved, and the first operation unit controls the vehicle in real time can be ensured.

According to the first to the sixth possible implementations of the third aspect, in a seventh possible implementation, the steering wheel further includes an airbag accommodating part, and the airbag accommodating part does not overlap a projection of the first operation unit on a rotation plane of the steering wheel.

Optionally, in the steering wheel provided in this application, the airbag accommodating part does not overlap the projection of the first operation unit on the rotation plane of the steering wheel. This can avoid interference of the first operation unit to an airbag ignition working process, and improve safety of a passenger during a vehicle collision.

Optionally, in a possible implementation, an airbag may alternatively pop out from another location outside the steering wheel. In particular, when a steering wheel rim is an incomplete circle or in an abnormal shape, the airbag may pop out from another location to protect a driver.

With reference to the first to the seventh possible implementations of the third aspect, in an eighth possible implementation, the steering wheel further includes an identity recognition unit, and the identity recognition unit includes at least one of the following: a fingerprint recognition unit, a sound recognition unit, and a facial recognition unit.

Optionally, the identity recognition unit may be a fingerprint recognition unit or a facial recognition unit. Alternatively, the identity recognition unit may further include another implementation, for example, may be a palmprint recognition unit, an iris recognition unit, or a voice recognition unit. After a user identity is recognized by the identity recognition unit, a more appropriate function or operation interface for recommending content may be provided for a user based on a user preference.

Optionally, the steering wheel may further include a heart rate detection unit. The heart rate detection unit may detect a heart rate of the user, to provide health guidance for the user. In addition, the heart rate detection unit may provide an information input for sensing user emotion, to comprehensively evaluate the user emotion. In addition, the heart rate detection unit may further provide an information input for a driver monitoring system. For example, whether a user is a real person may be determined by monitoring a heart rate, to ensure that the user is in a state in which the user can take over driving permission at any time.

According to the first to the eighth possible implementations of the third aspect, in a ninth possible implementation, the steering wheel further includes a second operation unit, and the steering wheel further includes a second mounting part. The second operation unit is configured to display an operation interface and receive a user instruction, and the second operation unit is detachably mounted on the second mounting part.

Optionally, the steering wheel provided in this application may include at least one operation unit. For example, the steering wheel may include a first operation unit and a second operation unit. When there are a plurality of operation units, a plurality of operation interfaces may be simultaneously displayed, to provide better operation experience for the user. It should be noted that, a collision safety requirement of the vehicle needs to be considered in an arrangement manner of the operation unit.

A fourth aspect of this application provides an electronic apparatus. In a first possible implementation of the fourth aspect, the electronic apparatus includes:
an operation unit, configured to display an operation interface and receive a user instruction, where the operation interface is obtained based on status information, and the status information includes environment information; and
a first connection part, where the first connection part is configured to detachably fasten the electronic apparatus.

Optionally, the environment information includes at least one of the following: location information, road information, weather information, and accident information.

Optionally, the operation interface may also be obtained based on vehicle information. The vehicle information includes at least one of the following: driving status information and use status information. The driving status information includes at least one of the following: driving mode information, gear information, motion status information, drive system status information, energy system status information, lighting system status information, and vehicle fault information. The use status information includes at least one of the following: call status information, screen brightness, speaker volume, a temperature adjustment mode, an air circulation mode, a seat status, a window status, and an atmosphere light status.

Optionally, the operation interface may also be obtained based on user setting information. The user setting information may be obtained based on user identity information, where the user setting information includes at least one scenario, at least one operation interface, and information about a correspondence between the scenario and the operation interface. A first operation interface that matches a first scenario is obtained based on the user setting information.

Optionally, the electronic apparatus provided in the fourth aspect of this application may display an appropriate operation interface based on input information like vehicle status information, environment information, and user setting information, to provide more comfortable operation experience for a user.

Optionally, the electronic apparatus provided in the fourth aspect of this application may have a plurality of hardware configuration solutions. When a vehicle needs to upgrade a hardware configuration, an electronic device with a low hardware configuration may be removed, and an upgraded electronic device may be mounted.

According to the first possible implementation of the fourth aspect, in a second possible implementation, the first connection part includes at least one of the following: a magnetic attraction unit and a snap-fit unit.

Optionally, the electronic apparatus provided in the fourth aspect of this application may be connected to the steering wheel provided in the third aspect of this application through magnetic attraction, a snap-fit, or a combination of magnetic attraction and a snap-fit. The electronic device is connected through magnetic attraction or a snap-fit, to facilitate mounting of the electronic device on the steering wheel, or facilitate removal of the electronic device from the steering wheel.

Optionally, reliability of a connection between the first operation unit and the steering wheel can be effectively improved through a snap-fit connection. When the first operation unit is mounted on the steering wheel and is in a locked state, damage caused by falling off or splashing of the first operation unit or a part of the first operation unit to a passenger during a vehicle collision can be effectively prevented, and passenger safety during the vehicle collision can be improved.

Optionally, in the steering wheel provided in this application, the first operation unit may be connected to the steering wheel body through magnetic attraction. A magnetic attraction connection can improve reliability of a connection between the first operation unit and the steering wheel. In addition, the magnetic connection is also convenient for disassembly and positioning. During mounting, the magnetic attraction may further provide guidance for the mounting, so that a user can mount the first operation unit on the steering wheel. When the first operation unit is placed at a location close to a mounting point, a magnetic attraction part may align the first operation unit with the steering wheel through attraction, to facilitate alignment and mounting.

With reference to the first or the second possible implementation of the fourth aspect, in a third possible implementation, the apparatus further includes a wireless charging receive end, and the wireless charging receive end is configured to transmit electric energy.

Optionally, the electronic device provided in this application may include the wireless charging receive end. Charging in a wireless manner can reduce external hardware interfaces of the electronic device, simplify a connection or mounting manner, and improve dustproof and waterproof capabilities of the electronic device. In addition, convenience of disassembling and assembling the first operation unit can be improved.

In a possible implementation, a wireless communication connection may be implemented by using a wireless charging transceiver coil. When the wireless communication connection is established by using the charging coil, the wireless charging coil may be fully used in a frequency division multiplexing or time division multiplexing manner. In this way, a structure of the electronic device can be simplified.

According to the first or the second possible implementation of the fourth aspect, in a fourth possible implementation, the apparatus further includes a communication interface, where the communication interface is configured to establish a communication connection to a vehicle-mounted device.

Optionally, the steering wheel provided in this application may establish a communication connection to the first operation unit in a wired or wireless manner. The wireless manner is used to perform a communication connection, so that a hardware interface can be simplified, and it is convenient for the first operation unit to establish a wireless communication connection to any on-board unit. The wired manner is used to perform a communication connection, so that stability of the communication connection can be improved, and the first operation unit controls the vehicle in real time can be ensured.

According to the first or the second possible implementation of the fourth aspect, in a fifth possible implementation, the apparatus further includes a wireless communication unit, where the wireless communication unit is configured to establish a wireless communication connection to a vehicle-mounted device of a vehicle.

According to any one of the first to fifth possible implementations of the fourth aspect, in a sixth possible implementation, the apparatus further includes a feedback unit, where the feedback unit includes at least one of the following: a vibration feedback unit, a sound feedback unit, and a picture feedback unit. The vibration feedback unit is configured to output a vibration signal according to the user instruction. The sound feedback unit is configured to output a sound signal according to the user instruction. The picture feedback unit is configured to output a picture effect according to the user instruction.

Optionally, the electronic device provided in this application may further include the feedback unit. The feedback unit may feed back an operation of the user based on the vehicle status information, the environment information, and the like. For example, when the user presses an operation button on the operation unit, the electronic device may feed back a vibration signal, to provide a touch sense for the user. In addition, feedbacks in other manners such as a sound and an image may be provided. In different vehicle statuses and/or environments, or in different scenarios, both a feedback manner and a feedback intensity of the feedback unit may be adaptively adjusted, to provide better operation experience for the user.

A fifth aspect of this application provides a computer-readable storage medium. The computer-readable storage medium stores code or instructions. When the code or the instructions is/are executed, any method provided in the first aspect of this application is performed.

A sixth aspect of this application provides a vehicle. The vehicle includes any apparatus provided in the second aspect of this application, or the vehicle includes any steering wheel provided in the third aspect of this application, or the vehicle includes any apparatus provided in the fourth aspect of this application.

In conclusion, the steering wheel, the electronic device, the vehicle, and the control method provided in this application can provide the user with abundant and personalized operation interfaces, and the operation interfaces have an adaptive switching function, to provide a most convenient operation interface for the user at any time. This not only ensures driving safety and collision safety, but also improves user operation efficiency, and reduces a misoperation risk. In addition, the steering wheel, the electronic device, and the vehicle provided in this application can further implement hardware upgrade more conveniently, simplify upgrade steps and mounting requirements, and bring more possibilities for personalized configurations of the user.

### BRIEF DESCRIPTION OF DRAWINGS

FIG. 1 is a schematic block diagram of vehicle functions according to an embodiment of this application;
FIG. 2 is a schematic diagram of a layout of a vehicle steering wheel according to an embodiment of this application;
FIG. 3-a is a schematic diagram of an architecture of a steering wheel system according to an embodiment of this application;

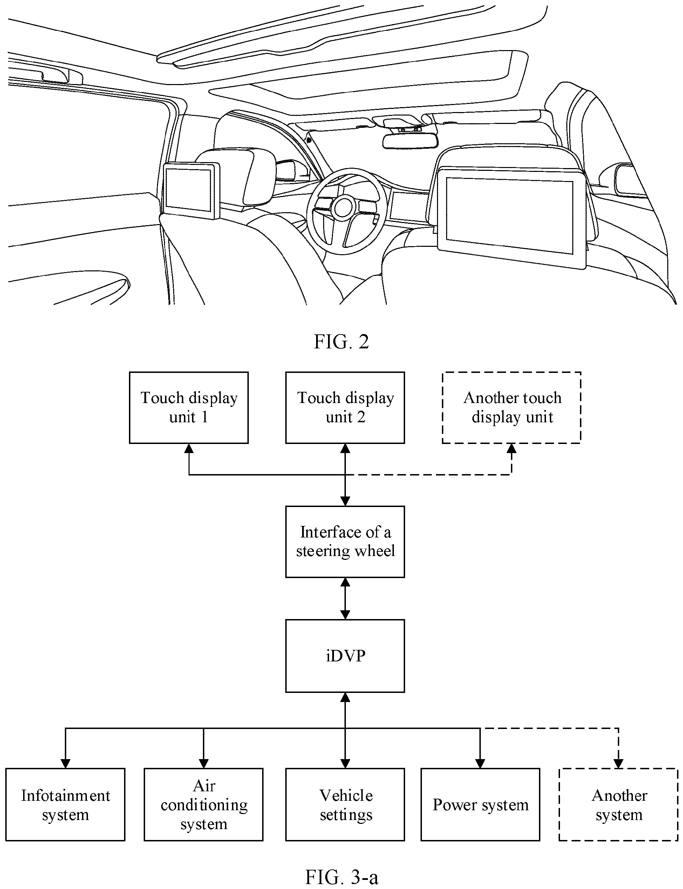

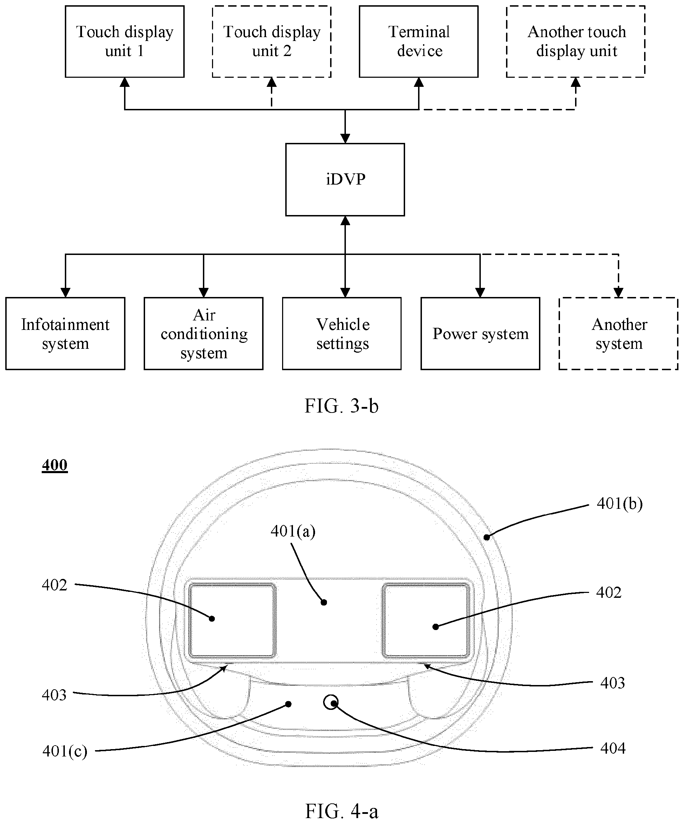

FIG. 3-b is a schematic diagram of an architecture of another steering wheel system according to an embodiment of this application;

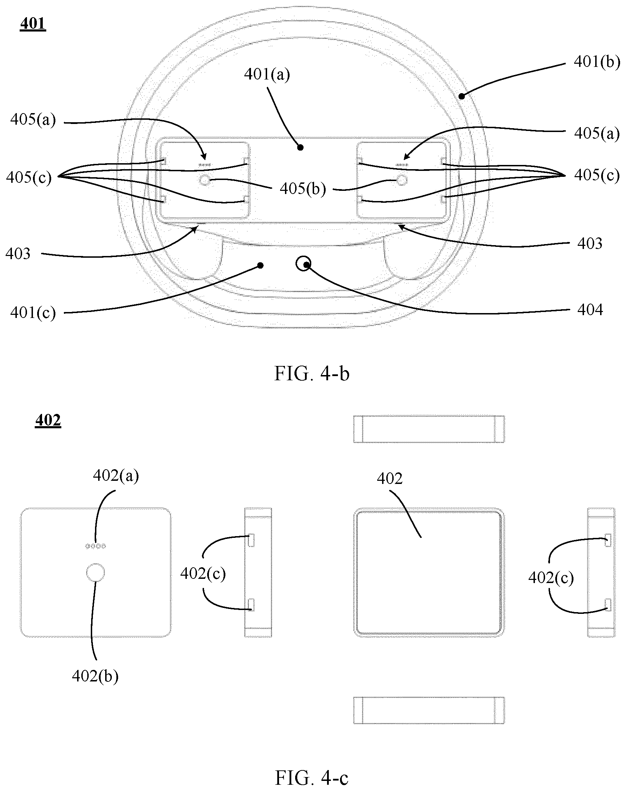

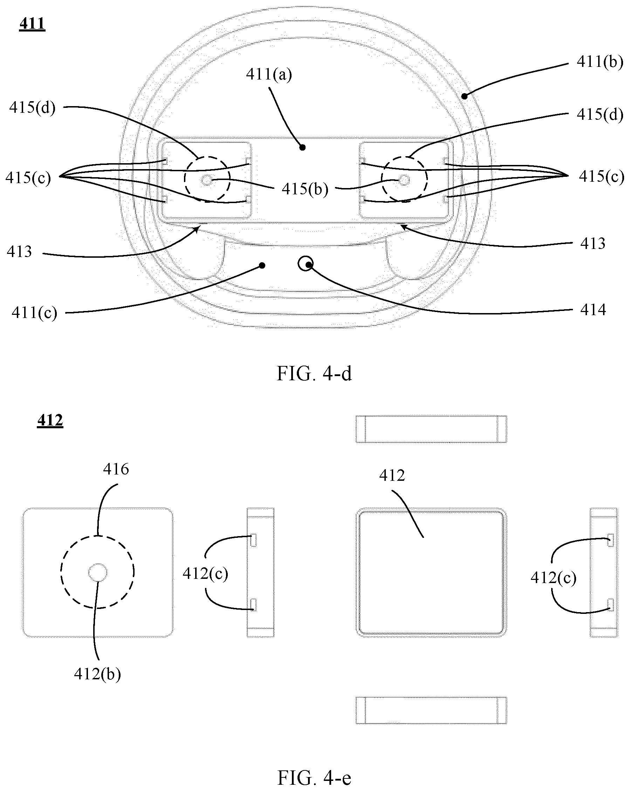

FIG. 4-a is a schematic diagram of a steering wheel according to an embodiment of this application;
FIG. 4-b is a schematic diagram of a steering wheel body according to an embodiment of this application;
FIG. 4-c is a schematic diagram of a touch display unit according to an embodiment of this application;
FIG. 4-d is a schematic diagram of another steering wheel body according to an embodiment of this application;
FIG. 4-e is a schematic diagram of another touch display unit according to an embodiment of this application;

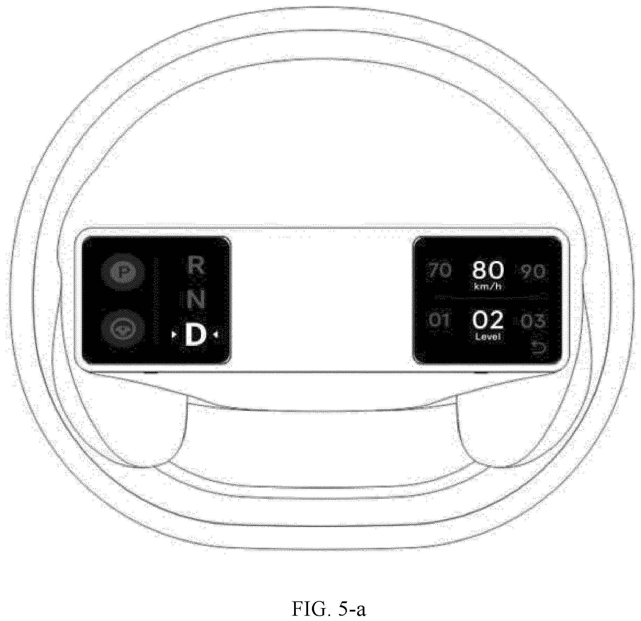

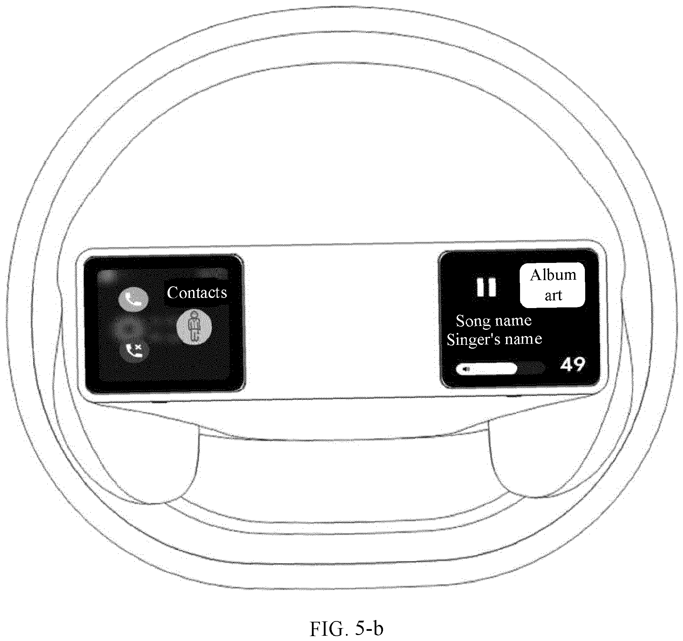

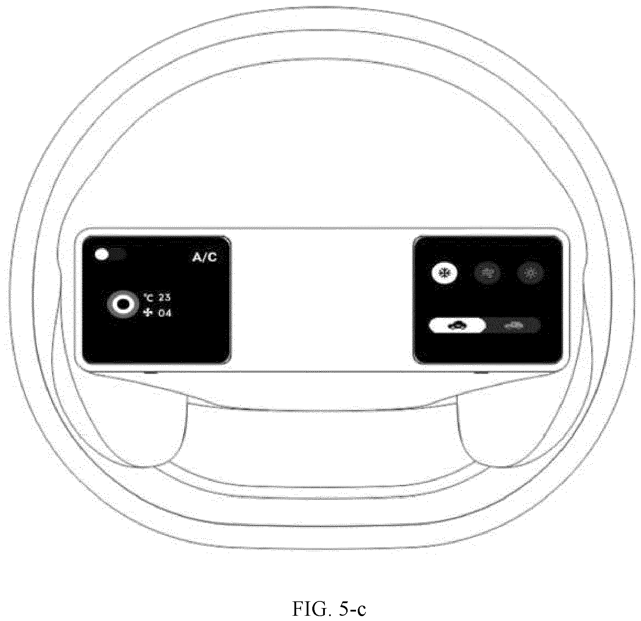

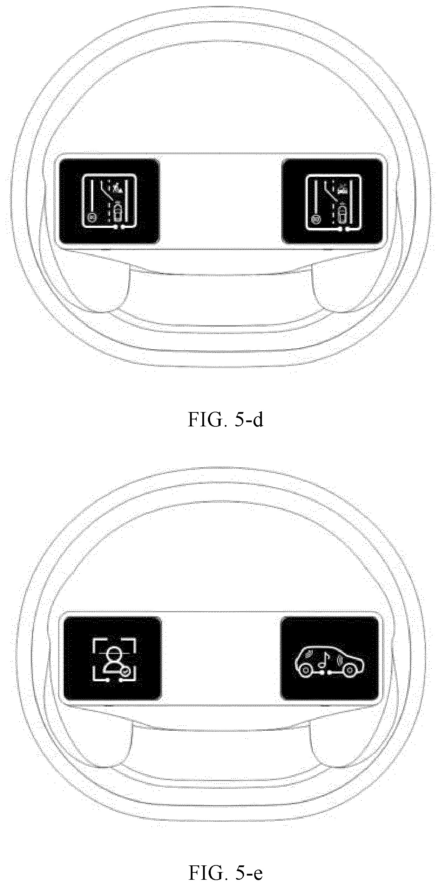

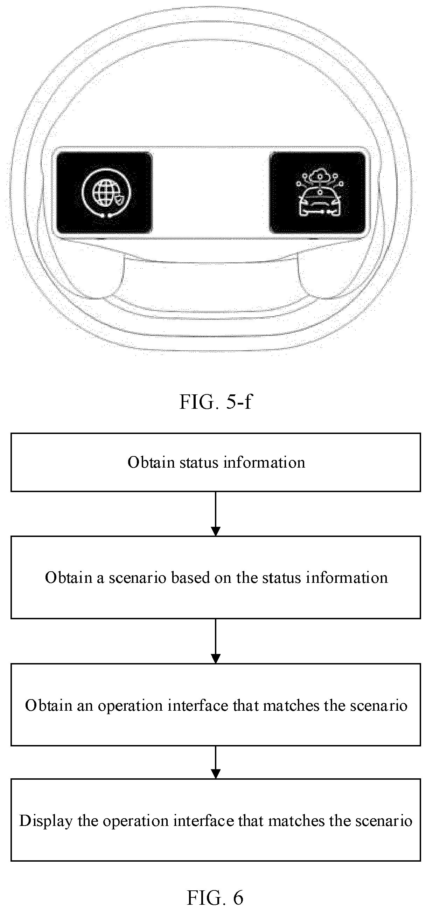

FIG. 5-a is a schematic diagram of an operation interface of a steering wheel according to an embodiment of this application;
FIG. 5-b is a schematic diagram of another operation interface of a steering wheel according to an embodiment of this application;
FIG. 5-c is a schematic diagram of another operation interface of a steering wheel according to an embodiment of this application;
FIG. 5-d is a schematic diagram of another operation interface of a steering wheel according to an embodiment of this application;
FIG. 5-e is a schematic diagram of another operation interface of a steering wheel according to an embodiment of this application;
FIG. 5-f is a schematic diagram of another operation interface of a steering wheel according to an embodiment of this application;
FIG. 6 is a schematic diagram of an operation interface display method according to an embodiment of this application;

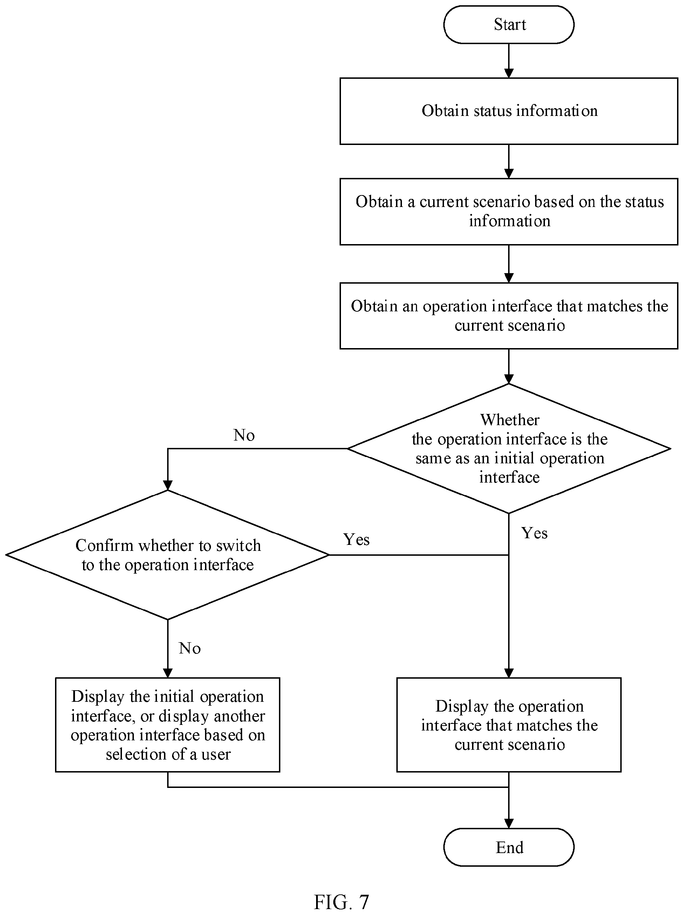

FIG. 7 is a schematic diagram of an operation interface display method according to an embodiment of this application;

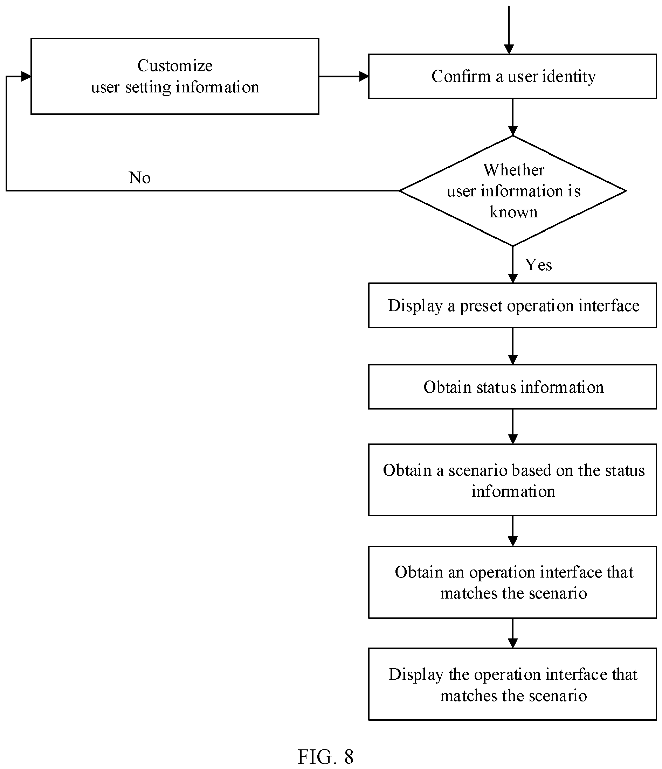

FIG. 8 is a schematic diagram of an operation interface display method according to an embodiment of this application;

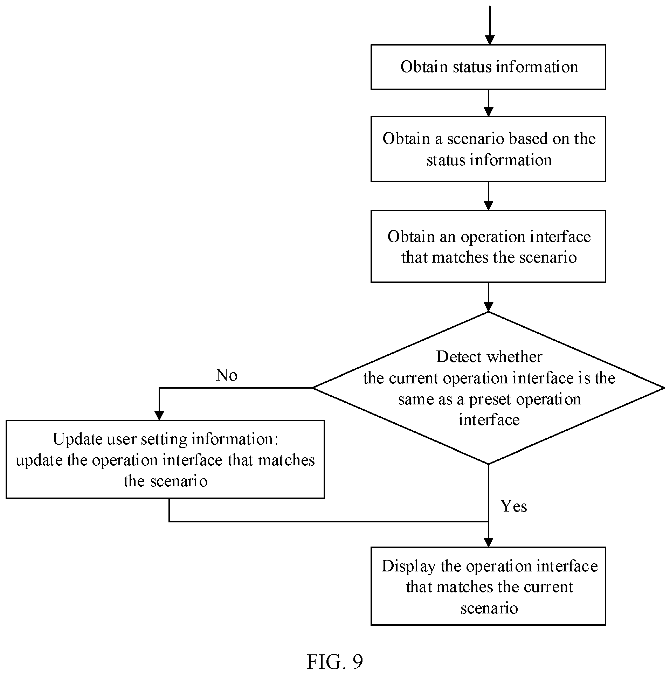

FIG. 9 is a schematic diagram of an operation interface display method according to an embodiment of this application;

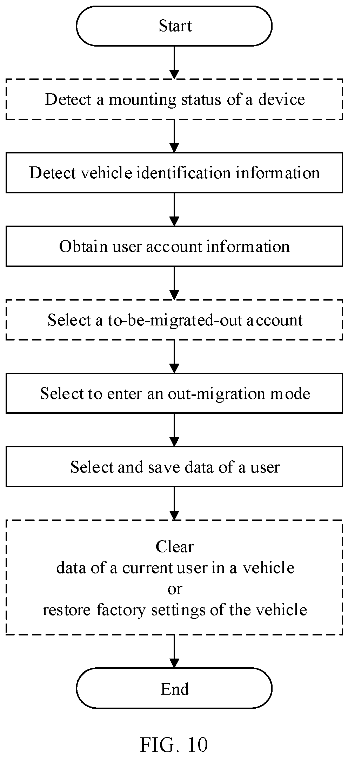

FIG. 10 is a schematic diagram of a data out-migration method according to an embodiment of this application; and

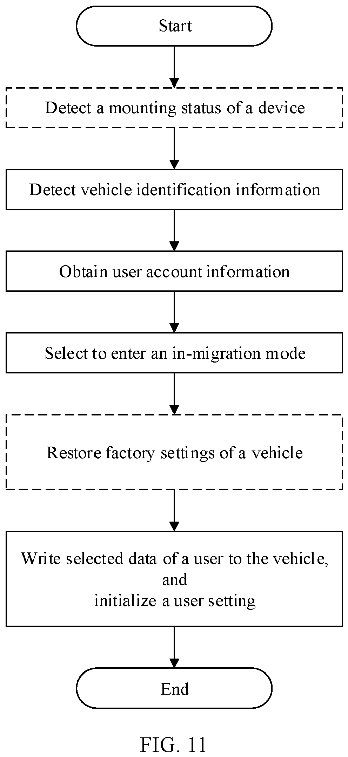

FIG. 11 is a schematic diagram of a data in-migration method according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may learn that, with technology development and emergence of a new scenario, technical solutions provided in embodiments of this application are also applicable to a similar technical problem.

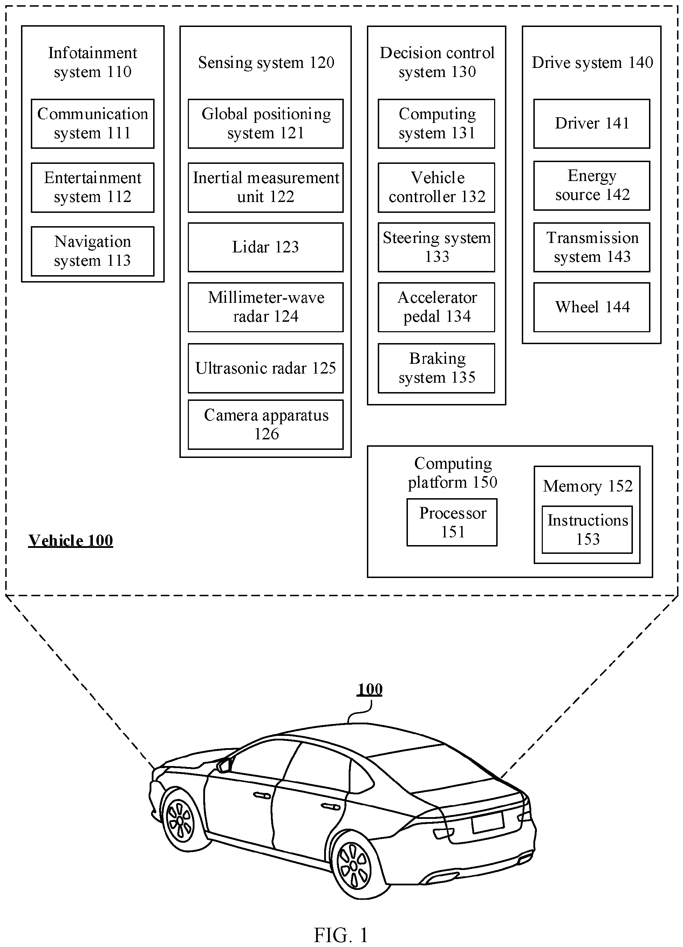

Automobiles are developing and innovating in a tide of electrification, networking, intelligence, sharing, or the like. FIG. 1 is a schematic diagram of functions of a vehicle 100 according to an embodiment of this application. The vehicle 100 may include various subsystems, such as an infotainment system 110, a sensing system 120, a decision control system 130, a drive system 140, and a computing platform 150. Optionally, the vehicle 100 may include more or fewer subsystems, and each subsystem may include a plurality of components. In addition, each subsystem and component of the vehicle 100 may be interconnected in a wired or wireless manner.

In some embodiments, the infotainment system 110 may include a communication system 111, an entertainment system 112, and a navigation system 113.

The communication system 111 may include a wireless communication system. The wireless communication system may directly perform wireless communication with one or more devices or perform wireless communication with one or more devices through a communication network. For example, the wireless communication system may use a third generation (3rd generation, 3G) cellular communication technology, for example, code division multiple access (code division multiple access, CDMA), or a fourth generation (4th generation, 4G) cellular communication technology, for example, a long term evolution (long time evolution, LTE) communication technology, or a 5th generation (5th generation, 5G) cellular communication technology, for example, a new radio (new radio, NR) communication technology. The wireless communication system may communicate with a wireless local area network (wireless local area network, WLAN) by using Wi-Fi. In some embodiments, the wireless communication system may directly communicate with a device through an infrared link or by using Bluetooth, or ZigBee (ZigBee). In other wireless protocols such as various vehicle communication systems, for example, the wireless communication system may include one or more dedicated short range communications (dedicated short range communications, DSRC) devices, and these devices may include public and/or private data communication between vehicles and/or roadside stations.

The entertainment system 112 may include a central control screen, a microphone, and a sounder. A user may listen to radio and play music in a vehicle through the entertainment system. Alternatively, a mobile phone is connected to a vehicle, to realize screen projection of the mobile phone on the central control screen. The central control screen may be a touchscreen, and the user may perform an operation by touching the screen. In some cases, a voice signal of the user may be obtained by using the microphone, and some control performed by the user on the vehicle 100 is implemented based on analysis of the voice signal of the user, for example, a temperature inside the vehicle is adjusted. In other cases, music may be played for the user through the sounder.

The navigation system 113 may include a map service provided by a map supplier, to provide navigation of a driving route for the vehicle 100. The navigation system 113 may be used together with a global positioning system 121 and an inertial measurement unit 122 of the vehicle. The map service provided by the map provider may be a two-dimensional map or a high definition map.

The sensing system 120 may include several types of sensors that sense surrounding environment information of the vehicle 100. For example, the sensing system 120 may include a global positioning system 121 (the global positioning system may be a global positioning satellite (global positioning satellite, GPS) system, a BeiDou system, or another positioning system), an inertial measurement unit (inertial measurement unit, IMU) 122, a lidar 123, a millimeter-wave radar 124, an ultrasonic radar 125, and a camera apparatus 126. The sensing system 120 may further include a sensor (for example, an in-vehicle air quality monitor, a fuel gauge, or an engine oil temperature gauge) of an internal system of the monitored vehicle 100. Sensor data from one or more of these sensors can be used to detect an object and corresponding features (a location, a shape, a direction, a speed, and the like) of the object. Such detection and recognition are key functions of a safe operation of the vehicle 100.

The positioning system 121 may be configured to estimate a geographical location of the vehicle 100. The inertial measurement unit 122 is configured to sense a location and an orientation change of the vehicle 100 based on an inertial acceleration. In some embodiments, the inertial measurement unit 122 may be a combination of an accelerometer and a gyroscope. The lidar 123 may sense, by using a laser, an object in an environment in which the vehicle 100 is located. In some embodiments, the lidar 123 may include one or more laser sources, a laser scanner, one or more detectors, and other system components. The millimeter-wave radar 124 may sense an object in a surrounding environment of the vehicle 100 by using a radio signal. In some embodiments, in addition to sensing an object, the radar 126 may further be configured to sense a speed and/or a moving direction of the object. The ultrasonic radar 125 may sense an object around the vehicle 100 by using an ultrasonic signal. The camera apparatus 126 may be configured to capture image information of a surrounding environment of the vehicle 100. The camera apparatus 126 may include a monocular camera, a binocular camera, a structured light camera, a panorama camera, and the like. The image information obtained by the camera apparatus 126 may include a static image, or may include video stream information.

The decision control system 130 includes a computing system 131 that performs analysis and decision making based on information obtained by the sensing system 120. The decision control system 130 further includes a vehicle controller 132 that controls a power system of the vehicle 100, a steering system 133, an accelerator pedal 134 (including an accelerator pedal of an electric vehicle or a throttle of a fuel vehicle, which is an example name herein), and a braking system 135 that are configured to control the vehicle 100.

The computing system 131 may be operated to process and analyze various information obtained by the sensing system 120 to identify a target, an object, and/or a feature in a surrounding environment of the vehicle 100. The target may include a pedestrian or an animal, and the object and/or the feature may include a traffic signal, a road boundary, and an obstacle. The computing system 131 may use technologies such as an object recognition algorithm, a structure from motion (structure from motion, SFM) algorithm, and video tracking. In some embodiments, the computing system 131 may be configured to: map an environment, track an object, estimate a speed of an object, and the like. The computing system 131 may analyze obtained various information and obtain a control policy for the vehicle.

The vehicle controller 132 may be configured to perform coordinated control on a power battery and a driver 141 of the vehicle, to improve power performance of the vehicle 100.

The steering system 133 may be operated to adjust a moving direction of the vehicle 100. For example, in an embodiment, the steering system 133 may be a steering wheel system. The accelerator pedal 134 is configured to control an operating speed of the driver 141 and control a speed of the vehicle 100.

The braking system 135 is configured to control the vehicle 100 to decelerate. The braking system 135 may slow down a wheel 144 by using a friction force. In some embodiments, the braking system 135 may convert kinetic energy of the wheel 144 into a current. The braking system 135 may also slow down a rotation speed of the wheel 144 by using another form, to control the speed of the vehicle 100.

The drive system 140 may include a component that provides power for the vehicle 100 to move. In an embodiment, the drive system 140 may include the driver 141, an energy source 142, a transmission system 143, and the wheel 144. The driver 141 may be an internal combustion engine, an electric motor, an air compression engine, or a combination of other types of engines, for example, a hybrid engine formed by a gasoline engine and an electric motor, or a hybrid engine formed by an internal combustion engine and an air compression engine. The driver 141 converts the energy source 142 into mechanical energy.

Examples of the energy source 142 include gasoline, diesel, other oil-based fuels, propane, other compressed gas-based fuels, ethyl alcohol, solar panels, batteries, and other power sources. The energy source 142 may also provide energy for another system of the vehicle 100.

The transmission apparatus 143 may transmit mechanical power from the driver 141 to the wheel 144. The transmission apparatus 143 may include a gearbox, a differential, and a drive shaft. In an embodiment, the transmission apparatus 143 may further include another component, for example, a clutch. The drive shaft may include one or more shafts that may be coupled to one or more wheels 121.

Some or all functions of the vehicle 100 are controlled by the computing platform 150. The computing platform 150 may include at least one processor 151, and the processor 151 may execute instructions 153 stored in a non-transitory computer-readable medium like a memory 152. In some embodiments, the computing platform 150 may alternatively be a plurality of computing devices that control individual components or subsystems of the vehicle 100 in a distributed manner.

The processor 151 may be any conventional processor, for example, a central processing unit (central processing unit, CPU). Alternatively, the processor 151 may further include a graphics processing unit (graphics processing unit, GPU), a field programmable gate array (field programmable gate array, FPGA), a system on chip (system on chip, SOC), an application-specific integrated (application-specific integrated circuit, ASIC) chip, or a combination thereof. Although FIG. 1 functionally illustrates the processor, the memory, and other elements of a computer 110 in a same block, a person of ordinary skill in the art should understand that the processor, the computer, or the memory may actually include a plurality of processors, computers, or memories that may or may not be stored in a same physical housing. For example, the memory may be a hard disk drive, or another storage medium located in a housing different from that of the computer 110. Therefore, it is understood that a reference to the processor or the computer includes a reference to a set of processors or computers or memories that may or may not operate in parallel. Different from using a single processor to perform the steps described herein, some components such as a steering component and a deceleration component may include respective processors. The processor performs only computation related to a component-specific function.

In various aspects described herein, the processor may be located far away from the vehicle and perform wireless communication with the vehicle. In another aspect, some processes described herein are performed on a processor disposed inside the vehicle, while others are performed by a remote processor, including performing steps necessary for single manipulation.

In some embodiments, the memory 152 may include the instructions 153 (for example, program logics), and the instructions 153 may be executed by the processor 151 to perform various functions of the vehicle 100. The memory 152 may also include additional instructions, including instructions used to send data to, receive data from, interact with, and/or control one or more of the infotainment system 110, the sensing system 120, the decision control system 130, and the drive system 140.

In addition to the instructions 153, the memory 152 may further store data, such as a road map, route information, a location, a direction, a speed, and other vehicle data of the vehicle, and other information. This information may be used by the vehicle 100 and the computing platform 150 during operation of the vehicle 100 in an autonomous mode, a semi-autonomous mode, and/or a manual mode.

The computing platform 150 may control the functions of the vehicle 100 based on inputs received from various subsystems (for example, the drive system 140, the sensing system 120, and the decision control system 130). For example, the computing platform 150 may utilize an input from the decision control system 130 to control the steering system 133 to avoid an obstacle detected by the sensing system 120. In some embodiments, the computing platform 150 may be operated to provide control over many aspects of the vehicle 100 and the subsystems of the vehicle 100.

Optionally, one or more of the foregoing components may be mounted separately from or associated with the vehicle 100. For example, the memory 152 may partially or completely exist or separate from the vehicle 100. The foregoing components may be communicatively coupled together in a wired and/or wireless manner.

Optionally, the foregoing components are merely examples. During actual application, components in the foregoing modules may be added or removed based on an actual requirement. FIG. 1 should not be construed as a limitation on this embodiment of this application.

Optionally, the vehicle 100 may be configured to be in a full or partial autonomous driving mode. For example, the vehicle 100 may obtain surrounding environment information of the vehicle 100 by using a sensing system 120, and obtain an autonomous driving policy based on analysis of the surrounding environment information, to implement full-autonomous driving, or present an analysis result to a user, to implement partial autonomous driving.

An autonomous driving vehicle traveling on a road, for example, the vehicle 100, may identify an object in an ambient environment of the autonomous driving vehicle, to determine to adjust a current speed. The object may be another vehicle, a traffic control device, or another type of object. In some examples, each identified object may be considered independently, and based on features of each object, for example, a current speed of the object, an acceleration of the object, and a spacing between the object and the vehicle may be used to determine the speed to be adjusted by the autonomous driving vehicle.

Optionally, the vehicle 100 or a sensing and computing device (for example, the computing system 131 or the computing platform 150) associated with the vehicle 100 may predict behavior of the identified object based on the features of the identified object and a state of the ambient environment (for example, traffic, rain, and ice on a road). Optionally, all identified objects depend on behavior of each other, and therefore all the identified objects may be considered together to predict behavior of a single identified object. The vehicle 100 can adjust a speed of the vehicle 100 based on the predicted behavior of the identified object. In other words, the autonomous driving vehicle can determine, based on the predicted behavior of the object, a state (for example, acceleration, deceleration, or stop) to which the vehicle needs to be adjusted. In this process, another factor may also be considered to determine the speed of the vehicle 100, for example, a horizontal location of the vehicle 100 on a road on which the vehicle travels, a curvature of the road, and proximity between a static object and a dynamic object.

In addition to providing an instruction for adjusting the speed of the autonomous driving vehicle, the computing device may provide an instruction for modifying a steering angle of the vehicle 100, so that the autonomous driving vehicle can follow a given track and/or maintain a safe horizontal distance and a safe vertical distance from an object (for example, a car on a neighboring lane of a road) near the autonomous driving vehicle.

The vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in embodiments of this application.

A display method, a display apparatus, and a steering wheel that are provided in this application may be applied to the vehicle shown in FIG. 1. The vehicle 100 may be a vehicle including a cockpit shown in FIG. 2. It should be noted that the steering wheel provided in this application may be applied to a left-hand drive vehicle, or may be applied to a right-hand drive vehicle. A type of the vehicle is not limited in embodiments of this application.

The following describes an architecture of a steering wheel control system provided in an embodiment of this application.

FIG. 3-a is a diagram of an architecture of a communication connection between a touch display unit of a steering wheel and a vehicle according to an embodiment of this application. In a possible implementation, as shown in FIG. 3-a, the steering wheel provided in this embodiment of this application may include at least one touch display unit, for example, may include a touch display unit 1 and a touch display unit 2. In addition, the touch display unit 1 and the touch display unit 2 are connected to an intelligent digital vehicle platform (intelligent digital vehicle platform, iDVP) through a hardware interface on the steering wheel, to control another system by using the intelligent digital vehicle platform iDVP. The intelligent digital vehicle platform can provide software interfaces and data of various vehicle functions, provide a more flexible function development environment for a developer, and help the developer implement more complex and diversified function development. For example, the steering wheel provided in this embodiment of this application may control a plurality of systems such as an infotainment system, an air conditioning system, and a power system. In addition, the steering wheel provided in this embodiment of this application may further control each system of the vehicle by using a terminal device. For the implementation shown in FIG. 3-a, stability of signal transmission can be ensured through a hardware interface connection, and external interference can be reduced.

FIG. 3-b is a diagram of another architecture of a communication connection between a touch display unit of a steering wheel and a vehicle according to an embodiment of this application. In a possible implementation, as shown in FIG. 3-b, the steering wheel provided in this embodiment of this application may include a touch display unit 1. The touch display unit 1 is connected to an intelligent digital vehicle platform iDVP through a wireless connection, and the intelligent digital vehicle platform controls another system. In another possible implementation, as shown in FIG. 3-b, the steering wheel provided in this embodiment of this application may further include a terminal device. The terminal device may establish a communication connection to another system of the vehicle in a wireless manner, and control the another system of the vehicle. For example, the terminal device may control a plurality of systems such as an infotainment system, an air conditioning system, and a power system of the vehicle. For another example, the terminal device may customize various systems of the vehicle.

For the implementation shown in FIG. 3-b, a touch display unit or the terminal device establishes a communication connection to another system of the vehicle in a wireless manner, to help improve a waterproof level of the touch display unit or another terminal device, reduce impact of dust, liquid, and the like on the touch display unit and the steering wheel, and reduce hardware interfaces.

The following describes in detail the steering wheel, the display method, the display apparatus, and the vehicle provided in this application.

An embodiment of this application provides a steering wheel system, to bring better control experience and a better display effect. FIG. 4-a shows a steering wheel 400 according to this application, and FIG. 4-d shows another steering wheel 410 according to this application.

FIG. 4-a is a schematic diagram of the steering wheel 400 according to an embodiment of this application. As shown in FIG. 4-a, the steering wheel 400 includes a steering wheel body 401 and a display unit 402 having a touch control function. A user may control a vehicle by operating the display unit 402. The display unit 402 having a touch control function is also referred to as a display unit 402 or a touch display unit 402 in the specification of this application. In FIG. 4-a, there are two touch display units 402 on the steering wheel 400, which are respectively located on left and right sides of the steering wheel body 401.

It should be noted that this application does not limit a quantity of touch display units on the steering wheel body 401. In a possible implementation, the steering wheel body 401 may include only one touch display unit 402. In another possible implementation, the steering wheel body 401 may include at least two touch display units.

In this embodiment provided in this application, as shown in FIG. 4-a, the steering wheel body 401 may further include a shaft part or a central part 401(a) of the steering wheel, a steering wheel rim 401(b), and a steering wheel spoke 401(c).

It should be noted that the steering wheel rim 401(b) may cover a complete circumference, or may cover a partial circumference. Alternatively, from another perspective, a projection of a shape of the steering wheel rim 401(b) on a rotation plane of the steering wheel may be a standard circle, or may be an ellipse or another variant of an abnormal shape. The shape of the steering wheel rim 401(b) is not limited in this embodiment of this application.

In a possible implementation, as shown in FIG. 4-a, the steering wheel 400 further includes a snap-fit switch 403. The snap-fit switch 403 may be a physical button, for example, the snap-fit switch is connected to a snap-fit through a mechanical structure. When the snap-fit switch 403 is pressed, the touch display unit 402 may be removed from the steering wheel body 401.

In addition, in another possible implementation, the snap-fit switch 403 may be a virtual button, and the snap-fit between the touch display unit 402 and the steering wheel is controlled by an electronic device. A virtual button may control an execution unit to release a locked state of the snap-fit so that the touch display unit 402 may be removed from the steering wheel body 401. The execution unit may be a micro motor, or the execution unit may be a micro actuator. A specific execution unit is not limited in this embodiment of this application.

In a possible implementation, as shown in FIG. 4-a, the steering wheel 400 may further include a fingerprint recognition module 404. The fingerprint recognition module 404 may be configured to recognize an identity, and may be configured to implement a function like starting a vehicle by one tap after recognition on a user identity succeeds.

In a possible implementation, the steering wheel 400 may further include an image recognition unit (not shown in FIG. 4-a). For example, the image recognition unit may be disposed on a panel of the central part 401(a) of the steering wheel. The image recognition module may be configured to recognize an identity, or configured to monitor a status of a passenger. For example, the image recognition unit may be used in a driver monitoring system. When it is detected that a driver has a tendency of not focusing or dozing, a vehicle generates a sound alarm, a vibration alarm, or a light alarm, to prompt the driver to improve alertness. This improves driving safety.

In a possible implementation, the steering wheel 400 may further include a light-emitting unit (not shown in FIG. 4-a). For example, the light-emitting unit may be disposed on the central part 401(a) of the steering wheel body 401; or the light-emitting unit may be a light strip disposed on the steering wheel rim part 401(b); or the light-emitting module may be a light strip disposed on the steering wheel spoke 401(c).

In a possible implementation, as shown in FIG. 4-a, the central part 401(a) of the steering wheel further includes an airbag, to ensure life safety of a passenger during a vehicle collision. In another possible implementation, the airbag is disposed outside the steering wheel body 401. When a vehicle collision occurs, and airbag protection needs to be triggered, the airbag extends from a gap between the steering wheel rim 401(b) and the central part 401(a) of the steering wheel and then expands to wrap and protect the passenger. This improves collision safety.

In a possible implementation, as shown in FIG. 4-a, the central part 401(a) of the steering wheel may further include a horn switch (not shown in FIG. 4-a). When the horn switch is pressed, a horn of the vehicle emits a sound signal to the outside to draw attention of pedestrians, vehicles, or other traffic participants.

FIG. 4-b is a schematic diagram of a steering wheel body 401 of a steering wheel 400 according to an embodiment of this application. As shown in FIG. 4-b, the steering wheel body 401 includes a mounting part 405. The touch display unit 402 shown in FIG. 4-a may be mounted on the steering wheel body 401 by using the mounting part 405.

In a possible implementation, as shown in FIG. 4-b, the steering wheel body 401 may include an interface 405(a). The interface 405(a) of the steering wheel body 401 cooperates with an interface 402(a) of the touch display unit 402. The cooperation described herein may be understood as that the two interfaces may be connected and implement an expected function. For example, the interface 405(a) and the interface 402(a) may be connected and implement a function of signal transmission or energy transmission.

In a possible implementation, as shown in FIG. 4-b, the interface 405(a) may be a power supply interface and also a communication interface. The steering wheel body 401 may supply power to the touch display unit 402 shown in FIG. 4-a through the interface 405(a). In addition, the steering wheel body 401 may also communicate with the touch display unit 402 through the interface 405(a).

In this application, when the interface 405(a) can provide both a power supply service and a communication service, the interface 405(a) may also be an iDVP interface described in the specification of this application.

In a possible implementation, as shown in FIG. 4-b, the mounting part 405 may include the interface 405(a). The interface 405(a) may be a power supply interface, and the steering wheel body 401 may supply power to the touch display unit 402 shown in FIG. 4-a through the interface 405(a). The touch display unit 402 may communicate with another device in the vehicle in a wireless manner, for example, may establish a communication connection to a vehicle cockpit domain controller through Bluetooth, near field communication (near field communication, NFC), or Wi-Fi.

It should be noted that, the interface 405(a) shown in FIG. 4-b may use another alternative solution. For example, contact power supply may be replaced with wireless power supply, and a hardware communication interface may also be replaced with a wireless communication interface. In addition, in this application, it should be noted that a location of the interface 405(a) is not limited, and a type and a form of the interface 405(a) are not limited. For example, the interface 405(a) may be located in a geometric center of the mounting part 405. For another example, the interface 405(a) may be a USB Type-C interface. For another example, the interface 405(a) may alternatively be an interface of another type.

In a possible implementation, as shown in FIG. 4-b, the mounting part 405 may include a magnetic attraction positioning part 405(b). The magnetic attraction positioning part 405(b) may provide magnetic attraction positioning assistance for the touch display unit 402 in a process of mounting the touch display unit 402 on the steering wheel body 401. On one hand, it is convenient for the touch display unit 402 to align with the mounting part 405, to improve mounting efficiency. On the other side, when the touch display unit 402 is mounted on the steering wheel body 401, a magnetic attraction force is provided to increase an interaction force between surfaces of the touch display unit 402 and the mounting part 405, so as to increase a friction force of the contact surface, reduce a possibility that the touch display unit 402 falls off from the steering wheel body 401, and help improve reliability of mounting the touch display unit 402 on the steering wheel body 401.

It should be noted that "magnetically-fixed", "magnetic attraction positioning", and "magnetic attraction" in this application may be understood as a manner of fixing or positioning by using a magnetic attraction force of a permanent magnet. The "magnetic attraction positioning part", a "magnetic attraction unit", or the like in this application may be understood as a part or unit that has a permanent magnet or that can be attracted by a permanent magnet.

In a possible implementation, as shown in FIG. 4-b, the mounting part 405 may further include a snap-fit part 405(c). The snap-fit part 405(c) cooperates with a snap-fit part 402(c) of the touch display unit 402. It should be noted that, when the touch display unit 402 is mounted on the steering wheel body 401, the snap-fit part 405(c) may lock the touch display unit 402. This can prevent the touch display unit 402 from falling off from the steering wheel body 401, to improve mounting reliability. When a vehicle collision occurs, the snap-fit part 405(c) can greatly reduce a risk of injury to a passenger caused by falling off and splashing of the touch display unit 402. This helps ensure collision safety of the vehicle.

As shown in FIG. 4-b, the steering wheel body 401 further includes a snap-fit switch 403. In a possible implementation, when the snap-fit switch 403 is pressed, the touch display unit 402 may be removed from the steering wheel body 401. When the touch unit 402 is mounted on the steering wheel 401, the snap-fit part 405(c) and the snap-fit part 402(c) are automatically locked. In addition, in another possible implementation, the snap-fit switch 403 may be a virtual button, and a snap-fit between the touch display unit 402 and the steering wheel is controlled by an electronic device. A virtual button may control an execution unit to release a locked state of the snap-fit, so that the touch display unit 402 may be removed from the steering wheel body 401. The execution unit may be a micro motor, or the execution unit may be a micro actuator. A specific execution unit is not limited in this application.

FIG. 4-c shows a touch display unit 402 according to an embodiment of this application. The touch display unit may be mounted on the steering wheel body 401 shown in FIG. 4-b.

In a possible implementation, as shown in FIG. 4-c, the touch display unit 402 may include an interface 402(a). An interface 402(a) of the touch display unit 402 cooperates with the interface 405(a) of the steering wheel body 401. The "cooperation" herein refers to descriptions in other embodiments of this application.

It should be noted that the interface in this application may be a power supply interface or a communication interface, or an interface that can supply power and perform communication. The interface may be implemented in a wireless manner or a wired manner.

In a possible implementation, as shown in FIG. 4-c, the interface 402(a) may be a power supply interface and also a communication interface. The touch display unit 402 may be powered by the steering wheel body 401 through the interface 402(a). In addition, the touch display unit 402 may communicate with the steering wheel body 401 through the interface 402(a).

In this application, when the interface 402(a) can provide both a power supply service and a communication service, the interface 402(a) may be an iDVP interface.

In addition, it should be noted that a location of the interface 402(a) is not limited in this application, and a type and a form of the interface 402(a) are not limited. For example, the interface 402(a) may be located in a geometric center of the touch display unit 402. For another example, the interface 402(a) may be a USB Type-C interface. For another example, the interface 402(a) may alternatively be an interface of another type.

In another possible implementation, as shown in FIG. 4-c, the touch display unit 402 may include the interface 402(a). The interface 402(a) may be a power supply interface, and the steering wheel body 401 may supply power to the touch display unit 402 shown in FIG. 4-c through the interface 402(a). The touch display unit 402 may communicate with another device in the vehicle in a wireless manner, for example, may establish a communication connection to a vehicle cockpit domain controller through Bluetooth, near field communication (near field communication, NFC), or Wi-Fi.

In a possible implementation, as shown in FIG. 4-c, the touch display unit 402 may include a magnetic attraction positioning part 402(b). The magnetic attraction positioning part 402(b) may provide magnetic attraction positioning assistance for the touch display unit 402 in a process of mounting the touch display unit 402 on the steering wheel body 401. On one hand, it is convenient for the touch display unit 402 to align with the mounting part 405, to improve mounting efficiency. On the other side, when the touch display unit 402 is mounted on the steering wheel body 401, a magnetic attraction force is provided to increase an interaction force between surfaces of the touch display unit 402 and the mounting part 405, so as to increase a friction force of the contact surface, reduce a possibility that the touch display unit 402 falls off from the steering wheel body 401, and help improve reliability of mounting the touch display unit 402 on the steering wheel body 401.

In a possible implementation, as shown in FIG. 4-c, the touch display unit 402 may further include a snap-fit part 402(c). The snap-fit part 402(c) cooperates with the snap-fit part 405(c) of the steering wheel body 401. As shown in FIG. 4-b, the steering wheel body 401 further includes a snap-fit switch 403. In a possible implementation, when the snap-fit switch 403 is pressed, the touch display unit 402 may be removed from the steering wheel body 401. When the touch unit 402 is mounted on the steering wheel 401, the snap-fit part 405(c) and the snap-fit part 402(c) are automatically locked.

It should be noted that, when the touch display unit 402 is mounted on the steering wheel body 401, the snap-fit part 402(c) may lock the touch display unit 402. This can prevent the touch display unit 402 from falling off from the steering wheel body 401, to improve mounting reliability. When a vehicle collision occurs, the snap-fit part 402(c) can greatly reduce a risk of injury to a passenger caused by falling off and splashing of the touch display unit 402. This helps ensure collision safety of the vehicle.

An embodiment of this application further provides a steering wheel 410. A steering wheel body 411 and a touch display unit 412 of the steering wheel 410 are respectively shown in FIG. 4-d and FIG. 4-e. Another configuration of the steering wheel 410 may be the same as that of the steering wheel 400. Details are not described herein again. A difference between the steering wheel 410 provided in this embodiment of this application and the steering wheel 400 provided in the embodiment one lies in that in the steering wheel 410, a wireless power supply and wireless communication solution may be used between the touch display unit 412 and the steering wheel body 411.

FIG. 4-d shows the steering wheel body 411 according to an embodiment of this application. As shown in FIG. 4-d, the steering wheel body 411 may further include a shaft part or a central part 411(a) of the steering wheel, a steering wheel rim 411(b), and a steering wheel spoke 411(c). In addition, the steering wheel body 411 may also include one or more of a snap-fit switch 413, a fingerprint recognition module 414, an image recognition module, a light-emitting module, an airbag, a horn switch, and the like. A function or a configuration of the steering wheel body 411 may be the same as the function or configuration described in one or more implementations of the steering wheel body 401.

In a possible implementation, as shown in FIG. 4-d, a wireless charging transmit end 415(d) is disposed in a mounting part 415 of the steering wheel body 411, as shown in a dashed line part. The wireless charging cable transmit end 415(d) of the steering wheel body 411 cooperates with a wireless charging receive end 412(d) of the touch display unit 412. The steering wheel body 411 may wirelessly supply power to the touch display unit 412 through the wireless charging transmit end 415(d) and the wireless charging receive end 412(d) of the touch display unit 412.

In a possible implementation, the touch display unit 412 may communicate with another device in the vehicle in a wireless manner, for example, may establish a communication connection to a vehicle cockpit domain controller through Bluetooth or Wi-Fi.

In a possible implementation, as shown in FIG. 4-d, the mounting part 415 of the steering wheel body 411 may include a magnetic attraction positioning part 415(b). The magnetic attraction positioning part 415(b) may provide magnetic attraction positioning assistance for the touch display unit 412 in a process of mounting the touch display unit 412 on the steering wheel body 411. On one hand, it is convenient for the touch display unit 412 to align with the mounting part 415, to improve mounting efficiency. On the other side, when the touch display unit 412 is mounted on the steering wheel body 411, a magnetic attraction force is provided to increase an interaction force between surfaces of the touch display unit 412 and the mounting part 415, so as to increase a friction force of the contact surface, reduce a possibility that the touch display unit 412 falls off from the steering wheel body 411, and help improve reliability of mounting the touch display unit 412 on the steering wheel body 411.

In a possible implementation, as shown in FIG. 4-d, the mounting part 415 may further include a snap-fit part 415(c). The snap-fit part 415(c) cooperates with a snap-fit part 412(c) of the touch display unit 412. As shown in FIG. 4-d, the steering wheel body 411 further includes a snap-fit switch 413. In a possible implementation, when the snap-fit switch 413 is pressed, the touch display unit 412 may be removed from the steering wheel body 411. When the touch unit 412 is mounted on the steering wheel 411, the snap-fit part 415(c) and the snap-fit part 412(c) are automatically locked.

It should be noted that, when the touch display unit 412 is mounted on the steering wheel body 411, the snap-fit part 415(c) may lock the touch display unit 412. This can prevent the touch display unit 412 from falling off from the steering wheel body 411, to improve mounting reliability. When a vehicle collision occurs, the snap-fit part 415(c) can greatly reduce a risk of injury to a passenger caused by falling off and splashing of the touch display unit 412. This helps ensure collision safety of the vehicle.

FIG. 4-e shows another touch display unit 412 according to an embodiment of this application. As shown in a dashed line part in FIG. 4-e, the wireless charging receive end 412(d) may be disposed in the touch display unit 412. The wireless charging receive end 412(d) may receive energy transferred by the wireless charging transmit end 415(d) in the steering wheel body 411, to supply power to the touch display unit 412. In addition, the touch display unit 412 may establish a wireless connection to another device of the vehicle. For example, the touch display unit 412 may be connected to a cockpit domain controller through Bluetooth or Wi-Fi.

In a possible implementation, as shown in FIG. 4-e, the touch display unit 402 may include a magnetic attraction positioning part 412 (b). The magnetic attraction positioning part 412(b) may provide magnetic attraction positioning assistance for the touch display unit 412 in a process of mounting the touch display unit 412 on the steering wheel body 411. On one hand, it is convenient for the touch display unit 412 to align with the mounting part 415, to improve mounting efficiency. On the other side, when the touch display unit 412 is mounted on the steering wheel body 411, a magnetic attraction force is provided to increase an interaction force between surfaces of the touch display unit 412 and the mounting part 415, so as to increase a friction force of the contact surface, reduce a possibility that the touch display unit 412 falls off from the steering wheel body 411, and help improve reliability of mounting the touch display unit 412 on the steering wheel body 411.

In a possible implementation, as shown in FIG. 4-e, the touch display unit 412 may further include a snap-fit part 412(c). The snap-fit part 412(c) cooperates with the snap-fit part 415(c) of the steering wheel body 411. As shown in FIG. 4-d, the steering wheel body 411 further includes a snap-fit switch 413. In a possible implementation, when the snap-fit switch 413 is pressed, the touch display unit 412 may be removed from the steering wheel body 411. When the touch unit 412 is mounted on the steering wheel 411, the snap-fit part 415(c) and the snap-fit part 412(c) are automatically locked.

It should be noted that, when the touch display unit 412 is mounted on the steering wheel body 411, the snap-fit part 412(c) may lock the touch display unit 412. This can prevent the touch display unit 412 from falling off from the steering wheel body 411, to improve mounting reliability. When a vehicle collision occurs, the snap-fit part 412(c) can greatly reduce a risk of injury to a passenger caused by falling off and splashing of the touch display unit 412. This helps ensure collision safety of the vehicle.

It should be noted that the touch display unit (402, 412) may use wireless power supply. Advantages of using the wireless power supply manner include: helping improve a waterproof capability of the steering wheel body (401, 411) and the touch display unit (402, 412), and reducing impact of dust, liquid, and the like on communication and power supply.

In addition, when a coil is used to implement wireless charging, the wireless charging and NFC may share the coil in a time division manner, a frequency division manner, or the like.

In another possible implementation, a mobile phone terminal may be directly mounted on the steering wheel through attraction.

In a possible implementation, the iDVP interface provided in this application may support hot swap of a device. According to the iDVP interface provided in this application, in some embodiments, the touch display unit (402, 412) can be plug-and-play, and can be quickly mounted through attraction by fully using the magnetic attraction part. In addition, the touch display unit (402, 412) can be reliably connected to the steering wheel body (401, 411) by using the snap-fit part. With the steering wheel provided in this embodiment of this application, a user can conveniently replace and upgrade the touch display unit in the steering wheel. Because a mounting form of the hot-swap is very simple and user-friendly, the user may purchase a new touch display unit and manually replace the touch display unit. Hardware upgrade can be completed by the user. The user does not need to send the vehicle to a specific service point for professional personnel to replace the touch display unit. By replacing a more advanced touch display unit by the user, the user may have more personalized choices, hardware of the steering wheel of the vehicle may be continuously updated, and user experience may also be continuously optimized.

The steering wheel provided in this embodiment of this application may include one or more touch display units. The touch display unit may establish a communication connection to another system of the vehicle, obtain data of the another system, and control the another system based on an operation of the user.

In conclusion, the steering wheel with the display unit provided in this embodiment of this application includes one or more displays with a touch control function. The display unit may provide a shortcut operation interface of a vehicle function, and the operation interface is customized by the user. In addition, the interface of the steering wheel provided in some embodiments of this application supports hot swap and plug-and-play. In some embodiments, the touch display unit may be mounted on the steering wheel by using the magnetic attraction part and the snap-fit part, to facilitate mounting and replacement. In addition, the touch display unit may have a plurality of different hardware configurations. For example, the touch display unit may include a standard configuration version and an advanced configuration version, so that the user can easily upgrade the hardware, or obtain more functions through network upgrade.

In addition, the steering wheel provided in this embodiment of this application may further provide a scenario memory function and an adaptive switching function of the operation interface, and may automatically display a most suitable operation interface based on vehicle status information, environment information, a scenario, and user identity information.

The foregoing describes some steering wheels provided in this application. The following describes in detail an operation interface of the steering wheel provided in this embodiment of this application.

In a possible implementation, the touch display unit (402, 412) provided in this embodiment of this application uses a modular design, and may adjust a hardware parameter and a software version based on requirements such as vehicle model positioning, a user preference, and manufacturer customization. For example, an automobile manufacturer may select a standard functional module or an advanced functional module. In addition, the touch display unit provided in this embodiment of this application supports remote upgrade, to continuously unlock more functions. This brings a common and new driving experience to the user.

The steering wheel (400, 410) provided in this embodiment of this application can implement a plurality of control functions by using the touch display unit (402, 412). For example, the steering wheel (400, 410) provided in this embodiment of this application may implement functions such as music control, call answering, gear control, scenario mode switching, air conditioner control, and vehicle setting customization.

The steering wheel provided in this embodiment of this application has a plurality of display modes. The specification of this application provides examples of a plurality of different display modes, which are respectively shown in FIG. 5-a to FIG. 5-f.

FIG. 5-a is a display mode of a touch display unit of a steering wheel according to an embodiment of this application. In a possible implementation, as shown in FIG. 5-a, the steering wheel provided in this embodiment of this application may include a first touch display unit and a second touch display unit. The first touch display unit may be configured to display a vehicle gear status. As shown in the display unit on the left in FIG. 5-a, the first touch display unit may include a reverse gear R, a neutral gear N, a drive gear D, and a parking gear P. The second touch display unit is configured to display a current driving speed and gear. As shown in the display unit on the right in FIG. 5-a, the second touch display unit shows that the current speed is 80 km/h, and the current gear is a gear 2. Optionally, the first touch display unit may further display an autonomous driving state switching button. When a user presses the autonomous driving button, and an autonomous driving system or a driving assistance system of a vehicle determines that the vehicle meets a requirement of autonomous driving or assisted driving, an autonomous driving mode or a driving assistance mode is enabled.

In this way, the user can more easily control the gear and the vehicle speed, and the autonomous driving mode is entered more quickly. The steering wheel provided in this application can greatly improve operation efficiency of the user, shorten time required by the user to search for a menu, and bring better driving experience.

FIG. 5-b is a display mode of a touch display unit of a steering wheel according to an embodiment of this application. In a possible implementation, as shown in FIG. 5-b, the steering wheel provided in this embodiment of this application may include a first touch display unit and a second touch display unit. The first touch display unit may be configured to display call information and contact information. The second touch unit may display music album information, song information, singer information, volume information, and the like. The user may control answering and hanging up of a call by using the touch display unit. In addition, the user can control playing, pausing, and switching of music, and control volume of the music.

FIG. 5-c is a display mode of a touch display unit of a steering wheel according to an embodiment of this application. In a possible implementation, as shown in FIG. 5-c, the steering wheel provided in this embodiment of this application may include a first touch display unit and a second touch display unit. The first touch display unit may be configured to display temperature information and air conditioner wind speed information of a vehicle. The second touch display unit may be configured to display an air conditioner working mode and a ventilation mode. For example, the air conditioner working mode may be cooling, ventilation, or heating, and the ventilation mode may be external circulation and internal circulation. A user may adjust an air conditioning system by using the touch display unit provided in this embodiment of this application. For example, the user may tap a "ventilation" button to switch a working mode of the air conditioning system from "cooling" to "ventilation". In addition, the user may tap "temperature" to adjust a temperature set by an air conditioner, for example, from "23°C" to "26°C". In addition, the user taps "air volume" to adjust an air supply level of the air conditioner, for example, from a level "04" to a level "03".

FIG. 5-d is a display mode of a touch display unit of a steering wheel according to an embodiment of this application. In a possible implementation, as shown in FIG. 5-d, a first touch display unit or a second touch display unit may display construction information of a road ahead or accident information of a road ahead. According to the steering wheel and the display method provided in embodiments of this application, when a sensor of the steering wheel senses or obtains information about a road condition ahead through the Internet of Vehicles, the display unit can notify the user, and the touch display unit of the steering wheel provides an alarm and a driving prompt for the user, to help the user effectively avoid congestion, and improve driving safety and driving experience of the user.

FIG. 5-e is a display mode of a touch display unit of a steering wheel according to an embodiment of this application. In a possible implementation, as shown in FIG. 5-e, a first touch display unit or a second touch display unit may display an identity verification status and a vehicle scenario mode. For example, as shown in FIG. 5-e, the first touch display unit may display identity verification information of a user, and when identity verification of the user succeeds, a prompt indicating that the identity verification succeeds is sent to the user.

The second touch display unit shown in FIG. 5-e may further display scenario information, for example, may be a concert hall mode. In the concert hall mode, the user may enjoy a high-quality audio feast. A vehicle may adaptively enable active noise reduction, and provide a multimedia control operation interface shown in FIG. 5-b for the user, so that the user can adjust parameters such as volume and sound quality. In addition, the scenario information may be further bound to user account information or user identity information. For example, when the identity verification of the user succeeds, a preset concert hall scenario operation interface is automatically displayed, or an operation interface that is more suitable for a current use requirement may be displayed based on vehicle status information and/or environment information. For example, when it is identified, based on the vehicle status information and/or the environment information, that the current vehicle is in a high-speed road scenario, vehicle gear information or vehicle speed information may be displayed, to facilitate the user to control a vehicle speed and a gear. It should be noted that, for explanations of the "scenario" herein, refer to descriptions of other parts in this specification of this application.

FIG. 5-f is a display mode of a touch display unit of a steering wheel according to an embodiment of this application. In a possible implementation, as shown in FIG. 5-f, a first touch display unit or a second touch display unit may display storage and synchronization status information of data of a user. For example, when a user wants to synchronize vehicle data to a cloud, the user may select data out-migration, and select a mode that the data is stored in the cloud, so that the second touch display unit may display a data synchronization operation interface shown in FIG. 5-f. For another example, the user may further choose to synchronize some data, for example, chat data, multimedia data, and photo data of the user. In a possible implementation, the user may further choose to synchronize data of an account, for example, data of a user A, or data of a user B.

It should be noted that the touch display unit provided in this embodiment of this application may further provide more abundant customized settings to always maintain optimal user experience. For example, functions such as touch button customization, common function customization, touch picture customization, touch widget customization, and touch scenario customization may be implemented, so that the user can obtain optimal driving experience in various different scenarios. The steering wheel provided in this embodiment of this application can effectively simplify an interaction interface, improve interaction efficiency, reduce physical components, and reduce costs. The operation interfaces provided in the foregoing embodiments are merely some but not all embodiments, and should not be construed as a limitation on this application.

When the vehicle includes a plurality of touchscreens, different operation interfaces may be respectively displayed on different touchscreens. As shown in FIG. 5-a, when the steering wheel has a first touchscreen and a second touchscreen, an operation interface displayed on the first touchscreen may include gear status information, a gear switching button, an automatic parking activation button, and an autonomous driving/assisted driving activation button. An operation interface displayed on the second touchscreen may include speed information, a speed control button, D (drive) gear information, and a gear control button. In this way, the user may obtain more vehicle status information by using two different touch display units.

In addition, it should be noted that the foregoing operation interface or related information may be displayed on the touch display unit of the steering wheel. In a possible implementation, the operation interface displayed on the steering wheel may be switched to another display or may be displayed in another display manner. In a possible implementation, an operation method for switching a display interface by the user may include the following steps:
obtaining a user instruction, where the instruction instructs to switch a display manner;
obtaining a target display manner and/or target display unit information according to the user instruction; and
displaying related information in the target display manner by using a target display unit.

The target display unit may have a plurality of forms. For example, the related information may be displayed by using another display, or may be displayed through a head-up display (head-up display, HUD) or augmented reality (augmented reality HUD, AR-HUD), or may be displayed by using AR glasses. The display manner may include screen display, projection display, holographic display, and the like. In addition, the display manner may further include setting information like brightness, a picture location, a picture rotation angle, a picture color, resolution, and contrast, and may be adjusted based on user setting information, or may be adjusted based on scenario information. The display unit may include an HUD, an AR-HUD, AR glasses, a display, a holographic display apparatus, and the like.

In addition, an instruction of the user for switching a display picture may be implemented in a manner like a voice, an air gesture, a sliding operation gesture on a screen, or a touch operation on a screen. For example, the user may select an operation interface by using a specific operation, or some information is displayed on a display or displayed through an HUD/AR-HUD. For example, the user may perform an upward sliding gesture operation on a current operation interface, so that information of a current touchscreen is displayed in front of the user through an HUD/AR-HUD. Alternatively, the user may perform a "grabbing" gesture operation when a hand is suspended, so that information of a current touchscreen is displayed by using AR glasses.

The following describes adjustment of the picture rotation angle in an extended manner.

In a possible implementation, when the steering wheel is rotated during manual driving or a system controls the steering wheel to rotate during autonomous driving/assisted driving, the steering wheel generates an angular displacement. When the steering wheel is rotated and the angular displacement is generated, an operation interface on the touchscreen also rotates by a corresponding angle with the steering wheel. This brings inconvenience to a user operation. In this case, to ensure that the operation interface on the steering wheel can be conveniently controlled at any angle and time, the operation interface may be adjusted based on a steering wheel angle.

In a possible implementation, the operation interface may be adjusted based on the steering wheel angle. The adjustment method may include the following steps: obtaining the steering wheel angle; and displaying the operation interface based on the steering wheel angle.

In a possible implementation, the operation interface may be adjusted based on a line-of-sight direction of the user. The adjustment method may include the following steps: obtaining the line-of-sight direction of the user; and displaying the operation interface based on the line-of-sight direction of the user and the steering wheel angle. The line-of-sight direction of the user may be a direction of a horizontal line of the user's eyes, or a reading direction of the user may be determined through image recognition. When the user adjusts the line-of-sight direction, for example, when the user faces the steering wheel and tilts a head clockwise by 90°, the operation interface on the touchscreen may also be synchronized with the user, and a picture is rotated clockwise by 90°. In this way, the user may accurately identify the operation interface of the touchscreen in different line-of-sight directions. This reduces a probability of a misoperation and brings better operation experience to the user.

The foregoing describes the operation interface provided in embodiments of this application. The touchscreen (402, 412) provided in embodiments of this application may display the operation interface, and may receive an operation instruction of the user. By performing an operation on the touchscreen (402, 412), the user can control the vehicle and/or a vehicle-mounted device. The following describes an operation interface display method provided in an embodiment of this application.

In a possible implementation, as shown in FIG. 6, the display method provided in this embodiment of this application may include the following steps.

S 110: Obtain status information.

S 120: Obtain a scenario based on the status information.

S 130: Obtain an operation interface that matches the scenario.

S 140: Display the operation interface that matches the scenario.

According to the operation interface display method provided in this embodiment of this application, a current scenario can be obtained based on current status information, and a convenient operation interface and intelligent driving experience can be provided for a user. The following first describes the foregoing scenario, status information, and the like in detail.

The "scenario" described in this specification of this application may be understood as a combination of specific constraint conditions that need to be met. The "scenario" may be a specific space condition that needs to be met, for example, in a highway, a petrol station, a home parking lot, or a charging station. The "scenario" may include a highway scenario, a petrol station scenario, a home parking lot scenario, a charging scenario, or the like. For another example, the "scenario" may be a specific time condition that needs to be met, for example, in a morning peak/night peak period, a holiday, or an anniversary. The "scenario" may include a commuting peak scenario, a holiday scenario, an anniversary scenario, or the like. For another example, the "scenario" may be another condition that needs to be met, for example, may be a scenario of heating in a vehicle in winter, a scenario of audio and video entertainment in a vehicle, a scenario of a rest and nap in a vehicle, or a scenario in which a vehicle enters a track after being adjusted to a track competition mode.

Examples of more scenario types may be shown in the following table. It should be noted that scenarios in the following table are merely used as examples for description, but are not intended to limit the protection scope of this application.

| Scenario types | Sub-scenarios | Operation interfaces |
|---|---|---|
| Driving scenarios | City commuting | Vehicle speed control operation interface, vehicle distance adjustment operation interface, drive system adjustment operation interface, steering system adjustment operation interface, braking system adjustment operation interface, and suspension system adjustment operation interface |
| | Business comfort | |
| | Long-distance travel | |
| | Rural off-road driving | |
| | Track competition Economical and environment-friendly scenario | |
| Parking scenarios | Manual parking | Gear operation interface, sensor operation interface, round-view picture operation interface, automatic parking operation interface, and parking out/in operation interface of narrow parking space |
| | Automatic parking | |
| Energy supplement scenarios | Charging station | Charging port cover opening operation interface, fuel port cover opening operation interface, battery swapping mode activation operation interface, vehicle safety self-detection operation interface, operation interface of reserving a charging station/battery swapping station/petrol station/hydrogen refueling station |
| | Battery swapping station | |
| | Petrol station | |
| | Hydrogen refueling station | |
| Leisure and relaxation scenarios | Rest and sleep | Temperature adjustment operation interface, air circulation operation interface, seat posture adjustment operation interface, seat ventilation operation interface, seat massage operation interface, schedule operation interface, alarm clock reminder operation interface, window control operation interface, and steering wheel location adjustment operation interface |
| | Massage relaxation | |
| | Mood adjustment | |
| Entertainment scenarios | Cinema | Multimedia operation interface, game operation interface, image editing operation interface, and video editing operation interface |
| | Concert hall | |
| | Audio and video studio | |
| | Game mode | |
| Conference/Call scenarios | Voice conference | Vehicle-mounted display operation interface, vehicle-mounted microphone operation interface, vehicle-mounted camera operation interface, conference software operation interface, call operation interface, voice area control operation interface, privacy mode operation interface, vehicle-mounted refrigerator operation interface, vehicle-mounted tea set operation interface, temperature adjustment operation interface, air circulation operation interface, seat posture adjustment operation interface, seat ventilation operation interface, seat massage operation interface, and schedule operation interface |
| | Video conference | |
| | Face-to-face meeting in a vehicle | |
| | Voice call | |
| | Video call | |
| Vehicle sharing scenarios | Lending to others | Shared account allocation operation interface, guest mode operation interface, one-tap privacy protection operation interface, traceless mode operation interface, vehicle rental operation interface, and identity verification operation interface |
| | Leasing to others | |
| Camping adventure /Emergency rescue scenarios | External power supply/heating | External power supply operation interface, external heating operation interface, external power transmission port cover opening operation interface, escape mode operation interface, suspension/drive/braking system operation interface, and traction mode operation interface |
| | Emergency escape | |
| | Rescue traction | |
| Fault scenarios | Faults related to driving safety | Fault prompt and warranty operation interface and emergency call operation interface |
| | Other faults | |
| Comfortable and healthy scenarios | Comfortable environment | Temperature adjustment operation interface, air purification operation interface, and pollution protection operation interface |
| | Health and pollution prevention | |
| Customized scenarios | Customized scenario 1 of a user 1 | Operation interface 1 set by the user 1 in the customized scenario 1 |
| | Customized scenario 2 of the user 1 | Operation interface 2 set by the user 1 in the customized scenario 2 |
| | Driving scenario of the user 1 | User 1 setting: In the driving scenario, a music control operation interface is used as an operation interface 3 |
| | Energy supplement scenario of the user 1 | User 1 setting: In the energy supplement scenario, a game operation interface is used as an operation interface 4 |
| | Customized scenario 3 of a user 2 | Operation interface 5 set by the user 2 in the customized scenario 3 |
| | Vehicle for a guest | Basic function operation interface and operation interface corresponding to a guest operation right set by a user |
| ... | ... | ... |

The status information described in the specification of this application may be input information that can affect interface switching.

In a possible implementation, the status information may include environment information. The environment information provided in this embodiment of this application may include at least one of the following: location information, road information, weather information, and accident information. The road information may include at least one of the following.
(1) Traffic participant information: a motor vehicle, a non-motor vehicle, a pedestrian, an animal, and a special vehicle.
(2) Road information: road marking information, road indication information, road type information, slope information, road adhesion coefficient information, obstacle information, exit/entry information (for example, a high-speed exit/entry and an elevated road exit/entry), and road construction and maintenance information.
(3) Traffic facility information may include a location and a status of a traffic facility, for example, may include a signal light, a speed bump, a speed test point, a camera, a noise detection apparatus, and a horn detection apparatus.
(4) Traffic command information, for example, may include signal light indication information and traffic manager indication information.
(5) Infrastructure information: energy supplement point information (for example, locations, use status, and billing rates of a petrol station, a charging station, a battery swapping station, a hydrogen refueling station, and a natural gas station), parking lot information, maintenance and repair point information, and emergency rescue point information.

In addition to the road information, the environment information may further include the weather information, the accident information, and the like. The weather information may include: a temperature, humidity, brightness, rainfall, an air pollution level, and the like. The accident information may include traffic accident information obtained through vehicle to everything V2X (vehicle to everything, V2X), or may include traffic accident information recognized by a vehicle by using a sensing system.

In a possible implementation, the status information may include vehicle information.

It should be noted that the vehicle information provided in this embodiment of this application indicates a status of a vehicle. For example, the vehicle information may include at least one of the following: driving status information and use status information.

The driving status information may include at least one of the following.
(1) Driving mode information: A driving mode may be classified based on a degree of participation of manual driving or autonomous driving. For example, the driving mode may be classified into manual driving, autonomous assisted driving, and autonomous driving based on a decreasing degree of manual participation. The driving mode may also be classified based on a change of vehicle power and/or a chassis control parameter, may be classified based on operation experience, or may be classified based on driving economy, for example, may be classified into a conventional driving mode, a comfortable driving mode, an economic driving mode, a sport driving mode, and an off-road driving mode.
(2) Gear information, for example, may include a drive gear, a neutral gear, a reverse gear, and a parking gear.
(3) Sport status information, for example, may include a location, a posture, a speed, an acceleration, a yaw angular velocity, and a yaw angular acceleration of a vehicle.
(4) Drive system status information, for example, may include a drive motor temperature and drive system power.
(5) Chassis system status information: a braking system status, a steering system status, and a suspension system status.
(6) Energy system status information, for example, may include output power of a power battery, a remaining battery level, and a temperature.
(7) Light system status information, for example, may include a turn signal status, a hazard warning signal status, a clearance lamp status, a headlamp status, a driving light status, a fog lamp status, a reversing light status, and a brake light status.
(8) Vehicle fault information, for example, may include drive system fault information, braking system fault information, and battery system fault information.

The use status information may include at least one of the following.
(1) Infotainment system usage, for example, may include time information, schedule information, contact information, call status information, screen brightness, and speaker volume.
(2) Comfort device usage, for example, may include a temperature adjustment mode, an air circulation mode, a seat posture status, a seat ventilation and heating system status, and a seat massage apparatus status.
(3) Light and atmosphere system status: a light status, a reading light status, an atmosphere light status, and a smell control system status.
(4) Usage of other accessories: For example, a window status, a sunroof status, a door status, a movable vehicle roof status, a wiper status, a front trunk status, a rear trunk status, and a vehicle-mounted refrigerator status.

A person skilled in the art may understand that the foregoing merely uses the environment information and the vehicle information as examples, and does not limit this embodiment of this application.

The following describes in detail the display method provided in this application with reference to a specific scenario.

Optionally, in a possible implementation, the status information includes the environment information, and an operation interface may be displayed based on the environment information. As shown in FIG. 5-a, when it is detected, based on the environment information, that a vehicle is located in a parking lot, for example, it may be identified, based on location information, that the vehicle is located in the parking lot, or it is identified, through environment sensing, that the vehicle is located in the parking lot, it is learned that a current scenario is a parking scenario in the parking lot. The touchscreen may display an operation interface corresponding to the parking scenario, for example, a gear switching interface, so that a user can switch between a drive gear and a reverse gear when the vehicle is parked. As shown in FIG. 5-c, when it is detected that an ambient temperature or a temperature in a vehicle is excessively high, it is learned that a current scenario is a cooling scenario, and the touchscreen may display an air conditioning system adjustment operation interface, to facilitate the user to adjust the temperature in the vehicle. As shown in FIG. 5-d, when there is a traffic accident on a road ahead, the touchscreen may display an accident reporting operation interface.

Optionally, in a possible implementation, the status information includes the vehicle information, and an operation interface may be displayed based on the vehicle information. As shown in FIG. 5-a, when it is learned, based on the vehicle information, that a vehicle is in a driving scenario, an operation interface corresponding to the driving scenario may be displayed. For example, when it is detected that a vehicle speed is excessively high, for example, exceeds a speed limit of 60 km/h, the touchscreen may display a vehicle speed adjustment interface, to help a user quickly set a cruise vehicle speed, a manual driving vehicle speed, an assisted driving vehicle speed, an autonomous driving vehicle speed, and the like. As shown in FIG. 5-b, when it is learned, based on the vehicle information, that a vehicle is in a conference/call scenario, an operation interface corresponding to the conference/call scenario may be displayed. For example, when a user receives an incoming call or a video call invitation, the touchscreen may display an incoming call operation interface or a video call operation interface, so that the user can start a voice call or a video call by one tap, or hang up the voice call or the video call. As shown in FIG. 5-d, when it is detected that a braking system in a vehicle is faulty, it is learned that the vehicle is currently in a fault scenario, and the display unit displays an operation interface corresponding to the fault scenario. For example, the touchscreen may display fault alarm information and display an emergency rescue interface or an emergency call operation interface, to ensure user safety.

Optionally, in a possible implementation, the status information may include the environment information and the vehicle information, so that an operation interface is displayed after the vehicle information and the environment information are comprehensively considered.

For example, in a possible implementation, when it is detected that gear information is a drive gear, time information is a morning peak period, for example, 8 o'clock to 9 o'clock in the morning, and the environment information includes a city road, a city commuting scenario in a driving scenario is entered. In the city commuting scenario, a vehicle speed control interface may be displayed, and a vehicle distance adjustment interface may also be displayed. In the city commuting scenario, a vehicle speed and distance can be adjusted by using the vehicle speed control interface and vehicle distance adjustment interface, to adapt to different road conditions.

For another example, in a possible implementation, as shown in FIG. 5-a, when it is detected that a current driving mode is manual driving, current environment information meets an autonomous driving condition, for example, a vehicle travels on a road that allows autonomous driving, self-detection of the current vehicle is normal, and an autonomous driving mode enabling condition is also met, the touchscreen may display a driving mode setting interface, and provide a button for enabling an autonomous driving mode for the user, so that the user can enable the autonomous driving mode by one tap.

For another example, in a possible implementation, as shown in FIG. 5-c, when it is detected that an external ambient temperature is high and an air pollution degree is serious, the touch display unit may display an air conditioner temperature adjustment interface and an air circulation adjustment interface, to facilitate the user to set a temperature and an air circulation mode. For example, the temperature may be set to 23°C, and the air circulation mode of a cockpit is internal circulation, to reduce impact of external air pollution.

For another example, in a possible implementation, when it is detected that a road ahead is bumpy in the environment information, and it is detected that a suspension status of a vehicle is adjustable and a chassis height is low, a suspension height adjustment operation interface may be displayed, so that the user can raise a chassis by one tap, to reduce a risk of bumping and scratching the chassis.

For another example, in a possible implementation, when a vehicle-mounted device is in a call state, a call scenario is entered. In the call scenario, a voice area control operation interface may be displayed, so that the user can conveniently adjust volume of each area in a passenger compartment. This reduces interference to a passenger in a rest.

It should be noted that, for each scenario, an operation interface corresponding to the scenario may be an operation interface provided by a system by default, or may be preset by the user. The user may preset an operation interface in each scenario. When there are a plurality of display apparatuses in one scenario, an operation interface of each display apparatus may be set in the scenario. When the scenario is switched to, all display apparatuses may be switched to a preset operation interface.

According to the control method provided in this embodiment of this application, the user may be provided with an adaptive operation interface. When the status information changes, the touchscreen may adaptively display different operation interfaces. For example, the operation interface display method provided in this embodiment of this application may implement the following steps:
obtaining first status information; obtaining a first scenario based on the first status information; obtaining a first operation interface that matches the first scenario; and displaying the first operation interface.

It should be noted that, according to the display method provided in this application, the operation interface may be switched in real time based on a change of a scenario. When the scenario changes, different operation interfaces that match different scenarios may be displayed, to provide more intelligent driving experience and more efficient operation and control experience for the user.

After the first scenario is obtained, if a scenario is switched from the first scenario to a second scenario, the display method can adapt to the change of the scenario, and an operation interface that matches the second scenario is displayed. The foregoing steps may be performed repeatedly. For example, the method may include:
obtaining second status information; obtaining the second scenario based on the second status information; obtaining a second operation interface that matches the second scenario; and displaying the second operation interface.

For example, in a possible implementation, a process in which the user drives home from a company may include switching between a plurality of scenarios.

Before the user drives into a community parking lot, vehicle gear information is a drive gear, environment information includes a city road, and a scenario is identified as a "city commuting" scenario. In this case, the touchscreen may display a vehicle speed control operation interface or a gear control operation interface, so that the user can learn about gear and vehicle speed information, and a quick control button can be provided for the user to adjust a vehicle speed and a gear.

Then, when the user drives into the community parking lot and prepares for parking, and it is detected that the gear information changes from "drive gear" to "reverse gear" and the environment information includes location information of the community parking lot, scenario information is identified as a parking scenario, and the operation interface is switched to an operation interface that matches the parking scenario; or when it is detected that the environment information includes parking space information, a scenario may be identified as a "parking scenario". In the parking scenario, the touchscreen may display an automatic parking activation operation interface, so that the user can enable an automatic parking function by one tap. Alternatively, the touchscreen may display surrounding environment information sensed by a vehicle sensor, so that the user can control the vehicle to be smoothly parked. This improves parking safety.

Subsequently, when it is detected that the gear information is a parking gear, and the environment information includes that the vehicle is currently located in the home parking lot, a "leisure and relaxation scenario" may be entered. The operation interface may be switched to an operation interface that matches the "leisure and relaxation scenario". In the "leisure and relaxation scenario", the touchscreen may display a window control operation interface, so that the user can conveniently open a window for ventilation. This avoids oxygen shortage in a passenger compartment caused by long-time window closing. Alternatively, in the "leisure and relaxation scenario", a temperature adjustment operation interface, an air circulation control operation interface, or the like may be displayed. In the "relaxation and leisure scenario", a seat posture adjustment interface may also be displayed, so that the user can adjust to a most appropriate seat posture, for example, half lying, lying flat, or sitting.

The display method provided in this embodiment of this application may be applied to the steering wheel described above. For example, in a possible implementation, the touch display unit (402, 412) provided in embodiments of this application may support a scenario adaptation function. For example, displayed multi-level menus may be intelligently switched based on a scenario in which the vehicle is located, to better match a driving scenario of the user.

For another example, in a possible implementation, the touch display unit (402, 412) provided in embodiments of this application may support a driving mode adaptation function. For example, displayed multi-level menus may be intelligently switched based on a driving mode of the vehicle, to better match a driving status of the vehicle.

For another example, in a possible implementation, in the steering wheel (400, 410) provided in embodiments of this application, there may be one or more touch display units (402, 412). A quantity of touch display units (402, 412) is not limited in this application. In addition, the touch display unit mounted in the steering wheel (400, 410) provided in embodiments of this application may be specially designed, or may be a mobile phone terminal or another touch display device.

In this way, in a process of switching between different scenarios, the vehicle can provide targeted operation interfaces that adapt to the scenarios. This brings more intelligent driving experience and a more efficient operation interface to the user.

As shown in FIG. 7, in a possible implementation, when a second scenario is different from a first scenario, a vehicle may display a second operation interface that matches the second scenario. In FIG. 7, a first operation interface is also referred to as an initial operation interface, and the second scenario is also referred to as a current scenario. Optionally, request information may be sent to a user, where the request information is used to request the user to confirm whether to switch to the second operation interface; and a first user instruction is obtained. The first user instruction instructs whether to switch to the second operation interface.
(1) If the first user instruction instructs the user to choose to switch to the second operation interface, the second operation interface is displayed. Alternatively, when the user does not make selection within a first time period, for example, no selection operation of the user is received within 5 seconds, the user may choose to switch to the second operation interface by default. In a possible implementation, the second operation interface may be first displayed when the scenario changes, and a prompt is sent to the user to query whether to switch back to the initial operation interface. The prompt may be in a form of a picture prompt, a sound prompt, a voice prompt, or the like. If the user does not instruct to switch back to the initial operation interface within a specific time period, the user accepts switching of the current operation interface by default.
(2) If the first user instruction instructs the user to choose not to switch to the first operation interface, in a possible implementation, the user may choose to switch back to the first operation interface, and in another possible implementation, the user may choose to switch to another operation interface. For example, in a possible implementation, when the scenario has been switched from the first scenario to the second scenario, and the user finds that a preset operation interface in the second scenario is inappropriate and wants to change an operation interface, the display method further includes: obtaining a second user instruction, where the first user instruction instructs to select a third operation interface as an operation interface that matches the second scenario. The third operation interface is an operation interface that is newly selected by the user and that matches the second scenario.

It should be noted that the user instruction in the specification of this application may be an operation instruction input by the user by performing a touch operation on the touchscreen, or may be an operation instruction input by the user by using a voice, or may be an operation instruction input by the user by using a physical button, a virtual button, a gesture/posture operation, or the like.

Therefore, according to the control method provided in this embodiment of this application, a more suitable operation interface may be displayed by using the touchscreen in different scenarios, so that the user can control the vehicle more conveniently. Scenarios provided in embodiments of this application include a driving scenario, a parking scenario, an energy supplement scenario, an entertainment scenario, and the like. Adjusting an operation interface of the touchscreen based on the scenarios has a plurality of advantages. For example, a case in which an operation interface of the touchscreen is frequently switched due to frequent changes of vehicle information, environment information, and the like can be reduced. For another example, during scenario switching, an information prompt of scenario switching may be provided for the user, and smooth transition may be brought to the user. In addition, more options can be provided for the user: when the user does not want to switch a scenario, the user may modify an operation interface of an original scenario or another operation interface selected by the user.

As shown in FIG. 8, in a possible implementation, the method further includes: obtaining user identity information, obtaining user setting information based on the user identity information, where the user setting information includes at least one scenario, at least one operation interface, and information about a correspondence between the scenario and the operation interface. Obtaining the operation interface that matches the scenario in step S130 specifically includes: obtaining, based on the user setting information, the operation interface that matches the scenario.

The identity information of the user may be obtained by using an identity recognition unit. Identity recognition may be implemented through fingerprint recognition, facial recognition, iris recognition, palmprint recognition, sound recognition, or the like. This is not limited in this application.

When a new user uses a vehicle, the user can create a user account and save related user setting information. In a possible implementation, a method for creating a user account may include the following steps: creating a user account, where the user account is bound to user identity information; and saving user setting information. If the user wants to change a preset operation interface, the user may select an appropriate operation interface by performing an operation on a touchscreen.

It should be noted that, the interface displayed by the touch display unit provided in this embodiment of this application may be adaptively adjusted based on a scenario change or a user setting. In a possible implementation, the operation interface may be further displayed based on the user identity information. For example, if the user sets an operation interface preferred by the user, when vehicle status information or environment information changes, the operation interface may remain unchanged. Alternatively, in a possible implementation, after the user sets a preferred operation interface, when vehicle status information or environment information changes, the user may be prompted whether to update the current operation interface.

In a possible implementation, the touch display unit (402, 412) provided in embodiments of this application may support a user preference memory function and a user account synchronization function. For example, according to the touch display unit provided in embodiments of this application, settings such as a style, a button arrangement, and a function menu sequence of a control interface of the touch display unit may be associated with a user account, and are switched, based on different user identities, to driving settings preferred by different users. In a possible implementation, after identifying a user identity, the touch display unit synchronizes a preference setting of the user to a vehicle end, so that different users can switch to a setting familiar to the users at any time.

Therefore, different users may have different operation interface settings on a same vehicle, or a same user may enjoy same or similar operation interface settings on different vehicles. The display method provided in this application can bring more personalized driving experience.

In addition, it should be noted that other information of the user may also affect display of the operation interface. In a possible implementation, for example, the user setting information may include contact information, a user schedule, or memo reminder information. The memo reminder of the user may be a reminder set based on a specific time point, for example, may be a reminder sent to the user when a specific time point arrives. The memo reminder of the user may also be a reminder set based on geographical location information, for example, a reminder sent to the user when a specific location arrives. In addition, the memo reminder of the user may also be a reminder set based on a specific trigger event, for example, a reminder sent to the user when an action of getting on a vehicle and opening a multimedia operation interface occurs, for another example, a reminder sent to the user when the user turns on an air conditioner and plays music and completes an action of adjusting a seat to an angle. In a possible implementation, the trigger event may be selected as follows: The vehicle and any vehicle-mounted device perform an action, or complete an action, or reach a state. In addition, when the foregoing reminders are sent, the user may further switch to a reminder operation interface, or switch to another preset operation interface. In this application, diversified settings are provided, to provide the user with more abundant control effects.

Optionally, as shown in FIG. 9, the display method provided in this application further includes: detecting whether a current operation interface is the same as a preset operation interface. For example, after the second user instruction (the first user instruction instructs to select the third operation interface as the operation interface that matches the second scenario) is obtained, if the third operation interface is different from the second operation interface, the user setting information is updated. After the user setting information is updated, the third operation interface is displayed when the second scenario is switched from another scenario next time. It should be noted that, the second operation interface herein is an operation interface that matches the second scenario in the user setting information before the user modifies the operation interface that matches the second scenario. In addition, optionally, in the first scenario, the user may also select another operation interface as a preset operation interface that matches the first scenario. A principle is similar to the foregoing, and details are not described again.

It should be noted that the detecting whether a current operation interface is the same as a preset operation interface does not mean that each pixel of a current picture is consistent with that of a preset picture. This is because a same operation interface may have different states. For example, a virtual button may be turned on or off. In this case, although pictures are different, the pictures still belong to the same operation interface. If functions of two operation interfaces are different, for example, a function page for controlling a vehicle speed is switched to a function page for controlling a temperature of an air conditioner, this case may be understood as that the two operation interfaces are different. Certainly, the user may customize an operation interface, and a button for controlling a vehicle speed and a button for controlling a temperature of an air conditioner may also be displayed in a same operation interface. It should be understood that in this case, the customized operation interface is not a same operation interface as an operation interface for simply controlling a vehicle speed.

It should be noted that the first scenario provided in some embodiments of this specification of this application may be an initial scenario of the vehicle, for example, may be a scenario after the vehicle is started. The first operation interface that matches the first scenario may be an operation interface after the vehicle is started. For another example, the first scenario may be a scenario in which the vehicle is running. The second scenario provided in some embodiments of this specification of this application may be a scenario in which the vehicle is running. It should be noted that the second scenario provided in some embodiments of this specification of this application appears after the first scenario. This sequence may be chronological, or may be a sequence difference in spatial locations, for example, first in a parking lot and then on a highway; or this sequence is a difference in other settings, for example, first in a rest and sleep scenario and then in a cinema scenario. Scenario switching is usually accompanied by a movement of a vehicle location, a change of a vehicle setting, a change of time, and the like. In a possible scenario switching process, an initial scenario of a vehicle is the first scenario, for example, a power supplement scenario in which the vehicle is charged in a home parking lot. After 10 minutes, the scenario changes. For example, if the vehicle enters a highway and enters a city commuting scenario, the second scenario may be the city commuting scenario. For another example, if the first scenario is a city commuting scenario, when the vehicle prepares for automatic parking after entering a company parking lot, the second scenario may be an automatic parking scenario. For example, when the vehicle automatically drives on a highway, the first operation interface may be an operation interface used to control a driving speed range of the vehicle. Then, when the vehicle moves away from the highway and drives into a service area for rest, the second operation interface may be an audiovisual entertainment operation interface, and the displayed audiovisual entertainment operation interface may be shown in FIG. 5-b.

Specific content of the first scenario or the second scenario is not limited in this application. With continuous emergence of new scenarios, the vehicle may also adaptively adjust, based on a change of a scenario, an operation interface to be displayed, to improve operation efficiency and bring better driving experience to a user.

Optionally, when an error occurs in recognition of a scenario by the vehicle, manual correction may be performed. In a possible implementation, after obtaining the second scenario based on the status information, the method further includes: obtaining a third user instruction, where the third user instruction instructs whether to switch to the second scenario; and if the third user instruction instructs to switch to the second scenario, obtaining the second operation interface that matches the second scenario; or if the third user instruction instructs not to switch to the second scenario, optionally, continuing to keep in the first scenario, and displaying an operation interface that matches the first scenario. Optionally, the method includes: obtaining a fourth user instruction, where the fourth user instruction instructs to switch to a third scenario, obtaining a fourth operation interface that matches the third scenario, and displaying the fourth operation interface.

According to the display method provided in embodiments of this application, scenario switching can be implemented. The scenario switching may be implemented by using an operation performed by the user on the touchscreen, a voice instruction of the user, a gesture instruction, or the like. For example, in a possible implementation, the user may implement scenario switching by performing a sliding operation on the touchscreen.

A user can switch from one scenario type to another scenario type, or switch from a sub-scenario of a scenario type to a sub-scenario of a different scenario type. A difference between the two cases lies in classification of scenario layers. In this embodiment of this application, a scenario division layer is not limited, and a scenario may be divided into one layer, two layers, or more layers. In a case of switching from one scenario type to another scenario type, for example, when the user switches from a "driving scenario" to a "leisure and relaxation scenario", or when the user switches from a "city commuting scenario" in the "driving scenario" to a "rest and sleep" scenario in the "leisure and relaxation scenario", the touchscreen may switch from the operation interface shown in FIG. 6-a to the multimedia control operation interface shown in FIG. 6-b.

In addition, users can switch between different sub-scenarios in a same scenario type. For another example, the user may switch from the "city commuting scenario" in the "driving scenario" to a "business comfort scenario" in the "driving scenario".

It should be noted that, the control method provided in embodiments of this application has high flexibility. Operation interfaces displayed by the touchscreen in a same scenario type can be kept unified or associated with each other, or different operation interfaces can be displayed by the touchscreen in different sub-scenarios in a same scenario type.

In a possible implementation, for example, when the user switches from the "city commuting scenario" to the "business comfort scenario", the touchscreen may display a same operation interface in both the foregoing two scenarios, for example, the operation interface may be a vehicle speed information operation interface, or may be an associated gear information operation interface. When there are a plurality of touch display apparatuses, a plurality of associated operation interfaces may also be displayed simultaneously. For example, as shown in FIG. 6-a, gear control operation interface and vehicle speed control operation interface may be simultaneously displayed on the two touchscreens.

It should be noted that the "scenario type" provided in some embodiments of this application may also be understood as an "overall scenario". For example, the "driving scenario" or the "leisure and relaxation scenario" may be respectively represented as a type of scenario, or may be used as an overall scenario. For example, there is a more specific sub-scenario in the "driving scenario", for example, the "driving scenario" may be the "city commuting" scenario, or may be a "long-distance travel" scenario, or may be a "track competition" scenario. For another example, a "leisure and relaxation" scenario type further includes sub-scenarios such as "rest and sleep" and "massage and relaxation". Specific scenario division is not limited in this application, and is merely used as an example for description.

In addition, the display method provided in this application further includes: obtaining, based on a scenario, a feedback mode that matches the scenario. The method may be applied to the display apparatus and the steering wheel provided in this application. The feedback mode includes a feedback manner and a feedback intensity. The feedback manner includes at least one of the following: a vibration feedback, a sound feedback, and a brightness feedback. The feedback intensity includes at least one of the following: a vibration amplitude, a vibration frequency, volume, and brightness.

During scenario switching, for example, the city commuting scenario is entered, the feedback intensity may be strong, the feedback manner may be the vibration feedback, and the feedback volume and the vibration amplitude may be high. However, when the rest and sleep scenario is entered, the feedback intensity may be weak, the feedback manner may be the sound feedback or brightness feedback, the brightness may be low, and the volume may be low. During the scenario switching, the feedback mode that matches the scenario may also be switched.

In this case, the feedback can be provided based on a user operation. Through a vibration, sound, picture, or brightness feedback, operation experience of a user can be improved, and a more real touch, sound, and picture can be brought to the user. In addition, by adaptively adjusting the feedback intensity and the feedback manner, a probability of a misoperation can be effectively reduced, and driving safety can be improved.

This application provides a display apparatus, where the display apparatus may include a display unit and a storage unit. The display apparatus may perform the foregoing display method. Based on the display apparatus, an embodiment of this application further provides a data in-migration and out-migration method.

In a possible implementation, the touch display unit (402, 412) provided in embodiments of this application further includes a storage unit. The storage unit is configured to store data like vehicle data and user privacy data that are generated when a user uses a vehicle. When the user gets off the vehicle, the user may take the touch display unit out of the vehicle, to avoid loss of the user data when the vehicle is stolen. In addition, the storage unit included in the touch display unit may be further configured to store a vehicle setting of the user. The user may store information like all personal data of the original vehicle and vehicle settings preferred by the user in the touch display unit provided in embodiments of this application. When the user changes a vehicle, the user may mount the touch display unit of the original vehicle on a touch display unit of the new vehicle, to implement user preference synchronization and personal data migration.

In a possible implementation, as shown in FIG. 10, when the user needs to migrate data out, the user may activate an out-migration function by performing an operation on a touchscreen. After obtaining a data out-migration instruction of the user, a device may first perform self-detection, for example, may detect a current mounting status of the device. If the current device is not correctly mounted, an alarm may be sent to the user, to prompt the user to mount again the device configured to store to-be-migrated-out data, for example, a device including the touchscreen provided in this application.

Optionally, vehicle identification information may be further detected. The recognition information may include identity recognition information of the vehicle, to ensure user permission and vehicle permission, and protect user privacy. The recognition information may also include a vehicle type or function information, to determine a type of data that can be stored in the vehicle and a type of a setting parameter that can be stored in the vehicle. In this way, related setting information or data may be loaded when the current vehicle is used next time.

Optionally, the data out-migration process may further include obtaining user information. In this way, the user permission may be determined based on user account information, and data or setting information of the user in the vehicle may be associated with a user account, and is conveniently uploaded to a cloud or is synchronized to each terminal.

Optionally, when at least one user account is stored in the vehicle, a user account to which to-be-synchronized data is associated may be determined based on selection of the user. For example, data of only one user account may be migrated out, or data of all user accounts that have permission control may be migrated out.

Optionally, the user may further select an out-migration mode. In a process of migrating data in the vehicle to an electronic device, selection of a data out-migration manner and a data storage manner by the user may be determined based on out-migration mode information. For example, the out-migration mode may be that local data of the vehicle is deleted after the data is migrated to the electronic device. For another example, the out-migration mode may be that local out-migration data of the vehicle is retained after the out-migration data is stored on the electronic device. For another example, the out-migration mode may be that data locally stored in the vehicle is deleted and the data is uploaded to a cloud in a unified manner. For another example, after data is migrated out, factory settings of the vehicle may be restored, or all data of a current user account in the vehicle may be cleared. In an automobile sharing scenario, leakage of personal privacy information can be effectively avoided. Herein, the out-migration mode may also be another type. This is merely an example, and should not be construed as a limitation on this embodiment of this application.

Similarly, an embodiment of this application further provides a data in-migration method. As shown in FIG. 11, the method may include: detecting a mounting status of a device, detecting vehicle identification information, obtaining user account information, selecting an in-migration mode, restoring a vehicle to factory settings, writing selected data of a user to the vehicle, initializing a user setting, and the like. The steps are similar to the data out-migration method, and reference may be made to the description of the out-migration mode. For the data in-migration method, the in-migration mode may be that data in an electronic device is retained and setting information and data of a user is imported to the vehicle; or the in-migration mode may be that data in an electronic device is deleted and only to-be-in-migrated data in the vehicle is stored, or in-migration data may be stored in a cloud and may be accessed and updated at any time by a mobile phone, a computer, a vehicle, and the like.

It should be noted that, compared with a method for synchronizing data of a user by using a cloud, a method of using the touch display unit provided in embodiments of this application is used, so that the user can complete steps of data migration and a preference setting by only performing simple mounting steps. This solution not only has advantages of simple operations and short time consumption, but also can save a large amount of network traffic fees for the user, and can ensure user data security and reduce a risk of leakage of personal privacy data.

This application further provides a vehicle. The vehicle includes the foregoing display apparatus or steering wheel, or the vehicle can perform the display method, the feedback method, or the data in-migration/out-migration method provided in embodiments of this application.

In conclusion, the display method, the display apparatus, the steering wheel, and the vehicle provided in this application can provide a user with abundant and personalized operation interfaces, and the operation interfaces have an adaptive switching function, to provide a most convenient operation entry for the user at any time. This not only ensures driving safety and collision safety, but also improves user operation efficiency, reduces a misoperation risk. In addition, the steering wheel, the electronic device, and the vehicle provided in this application can further implement hardware upgrade more conveniently, simplify upgrade steps and mounting requirements, and bring more possibilities for personalized configurations of the user.

In addition, an embodiment of this application further provides a computer program product. The computer program product includes computer program code. When the computer program code is run on a computer, the computer is enabled to perform the foregoing method provided in embodiments of this application.

An embodiment of this application further provides a computer-readable medium. The computer-readable medium stores program code. When the computer program code is run on a computer, the computer is enabled to perform the foregoing method provided in embodiments of this application.

In an implementation process, the steps in the foregoing methods can be completed by using an integrated logical circuit of hardware in the processor, or by using instructions in a form of software. The method of the communication disclosed with reference to embodiments of this application may be directly performed by a hardware processor, or may be performed by using a combination of hardware in a processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be noted that, in embodiments of this application, "first", "second", and various numerical numbers are merely used for differentiation for ease of description, but are not used to limit the scope of embodiments of this application, for example, distinguish different scenarios and operation interfaces.

It should be understood that a term "and/or" in this specification describes only an association relationship between associated objects and represents that three relationships may exist. For example, A and/or B may represent the following three cases: Only A exists, both A and B exist, and only B exists. In addition, a character "/" in this specification generally indicates an "or" relationship between associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may realize that the units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for a purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division of the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one location, or may be distributed on a plurality of network units. Some or all of the units may be selected based on actual requirements to achieve objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on this understanding, the technical solutions of this application essentially, part contributing to the conventional technology, or some of the technical solutions may be implemented in a form of a software product. A computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for displaying a vehicle operation interface, comprising:
obtaining status information, wherein the status information comprises environment information;
obtaining a first scenario based on the status information;
obtaining a first operation interface that matches the first scenario; and
displaying the first operation interface.

2. The method according to claim 1, wherein the method further comprises:
obtaining user identity information; and
obtaining user setting information based on the user identity information, wherein the user setting information comprises at least one scenario, at least one operation interface, and information about a correspondence between the scenario and the operation interface; and
the obtaining a first operation interface that matches the first scenario specifically comprises:
obtaining, based on the user setting information, the first operation interface that matches the first scenario.

3. The method according to claim 2, wherein the method further comprises:
obtaining a first user instruction, wherein the first user instruction instructs to select the first operation interface as an operation interface that matches the first scenario; and
if the first operation interface is different from a second operation interface, updating the user setting information, wherein
the second operation interface is an operation interface that is in the user setting information and that matches the first scenario currently.

4. The method according to any one of claims 1 to 3, wherein the environment information comprises at least one of the following: location information, road information, weather information, and accident information.

5. The method according to any one of claims 1 to 4, wherein the status information further comprises vehicle information, and the vehicle information comprises at least one of the following: driving status information and use status information;
the driving status information comprises at least one of the following: driving mode information, gear information, motion status information, drive system status information, energy system status information, lighting system status information, and vehicle fault information; and
the use status information comprises at least one of the following: call status information, screen brightness, speaker volume, a temperature adjustment mode, an air circulation mode, a seat status, a window status, and an atmosphere light status.

6. The method according to any one of claims 1 to 5, wherein after the obtaining a first scenario based on the status information, the method further comprises:
obtaining, based on the first scenario, a feedback mode that matches the first scenario, wherein
the feedback mode comprises a feedback manner and a feedback intensity, the feedback manner comprises at least one of the following: a vibration feedback, a sound feedback, and a brightness feedback, and the feedback intensity comprises at least one of the following: a vibration amplitude, a vibration frequency, volume, and brightness.

7. The method according to any one of claims 1 to 6, wherein a vehicle displays the first operation interface by using a steering wheel, and the method further comprises:
obtaining a steering wheel angle; and
adjusting a display angle of the first operation interface based on the steering wheel angle.

8. The method according to any one of claims 1 to 7, wherein the vehicle comprises a first display apparatus and a second display apparatus, and the first operation interface comprises a first sub-interface and a second sub-interface; and
the displaying the first operation interface specifically comprises:
displaying the first sub-interface by using the first display apparatus, and displaying the second sub-interface by using the second display apparatus.

9. An apparatus for displaying a vehicle operation interface, comprising:
an obtaining unit, wherein the obtaining unit is configured to obtain status information, and the status information comprises environment information;
a processing unit, wherein the processing unit is configured to obtain a first scenario based on the status information, and
the processing unit is further configured to obtain a first operation interface that matches the first scenario; and
a display unit, wherein the display unit is configured to display the first operation interface.

10. The apparatus according to claim 9, wherein the apparatus further comprises:
an identity information obtaining unit, wherein the identity information obtaining unit is configured to obtain user identity information; and
the processing unit is further configured to obtain user setting information based on the user identity information, the user setting information comprises at least one scenario, at least one operation interface, and information about a correspondence between the scenario and the operation interface, and
the processing unit is further configured to obtain, based on the user setting information, the first operation interface that matches the first scenario.

11. The apparatus according to claim 10, wherein the apparatus further comprises:
a receiving unit, configured to obtain a first user instruction, wherein the first user instruction instructs to select the first operation interface as an operation interface that matches the first scenario; and
the processing unit is further configured to update the user setting information when the first operation interface is different from a second operation interface, wherein
the second operation interface is an operation interface that is in the user setting information and matches the first scenario currently.

12. The apparatus according to any one of claims 9 to 11, wherein the environment information comprises at least one of the following: location information, road information, weather information, and accident information.

13. The apparatus according to any one of claims 9 to 12, wherein the status information further comprises vehicle information, and the vehicle information comprises at least one of the following: driving status information and use status information;
the driving status information comprises at least one of the following: driving mode information, gear information, motion status information, drive system status information, energy system status information, lighting system status information, and vehicle fault information; and
the use status information comprises at least one of the following: call status information, screen brightness, speaker volume, a temperature adjustment mode, an air circulation mode, a seat status, a window status, and an atmosphere light status.

14. The apparatus according to any one of claims 9 to 13, wherein the processing unit is further configured to obtain, based on the first scenario, a feedback mode that matches the first scenario; and
the feedback mode comprises a feedback manner and a feedback intensity, the feedback manner comprises at least one of the following: a vibration feedback, a sound feedback, and a brightness feedback, and the feedback intensity comprises at least one of the following: a vibration amplitude, a vibration frequency, volume, and brightness.

15. The apparatus according to any one of claims 9 to 14, wherein a vehicle displays the first operation interface by using a steering wheel, and the apparatus further comprises:
the obtaining unit, further configured to obtain a steering wheel angle; and
the processing unit, further configured to adjust a display angle of the first operation interface based on the steering wheel angle.

16. The apparatus according to any one of claims 9 to 15, wherein the display unit comprises a first display subunit and a second display subunit, and the first operation interface comprises a first sub-interface and a second sub-interface, wherein
the first display subunit is configured to display the first sub-interface, and the second display subunit is configured to display the second sub-interface.

17. A steering wheel, wherein the steering wheel comprises:
a first operation unit, configured to display an operation interface and receive a user instruction, wherein the operation interface is obtained based on status information, and the status information comprises environment information; and
a first mounting part, wherein the first operation unit is detachably mounted on the first mounting part.

18. The steering wheel according to claim 17, wherein the first operation unit is mounted on the first mounting part in a magnetically-fixed manner.

19. The steering wheel according to claim 17 or 18, wherein the first operation unit further comprises a first connection part, the first mounting part further comprises a second connection part, and the first operation unit is fastened to the first connection part by using the first connection part and the second connection part.

20. The steering wheel according to any one of claims 17 to 19, wherein the first operation unit comprises a wireless charging receive end, the first mounting part comprises a wireless charging transmit end, and the first mounting part supplies power to the first operation unit via the wireless charging transmit end and the wireless charging receive end.

21. The steering wheel according to any one of claims 17 to 20, wherein the steering wheel comprises a first interface, and the first operation unit establish a communication connection to the steering wheel through the first interface.

22. The steering wheel of any one of claims 17 to 20, wherein the first operation unit further comprises a wireless communication unit, and the wireless communication unit is configured to establish a wireless communication connection to a vehicle-mounted device of a vehicle.

23. The steering wheel according to any one of claims 17 to 22, wherein the steering wheel further comprises an airbag accommodating part, and the airbag accommodating part does not overlap a projection of the first operation unit on a rotation plane of the steering wheel.

24. The steering wheel according to any one of claims 17 to 23, wherein the steering wheel further comprises an identity recognition unit, and the identity recognition unit comprises at least one of the following: a fingerprint recognition unit, a sound recognition unit, and a facial recognition unit.

25. The steering wheel according to any one of claims 17 to 24, wherein the steering wheel further comprises a second operation unit, the steering wheel further comprises a second mounting part, the second operation unit is configured to display an operation interface and receive a user instruction, and the second operation unit is detachably mounted on the second mounting part.

26. An electronic apparatus, comprising:
an operation unit, configured to display an operation interface and receive a user instruction, wherein the operation interface is obtained based on status information, and the status information comprises environment information; and
a first connection part, wherein the first connection part is configured to detachably fasten the electronic apparatus.

27. The apparatus according to claim 26, wherein the first connection part comprises at least one of the following: a magnetic attraction unit and a snap-fit unit.

28. The apparatus according to claim 26 or 27, further comprising a wireless charging receive end, wherein the wireless charging receive end is configured to transmit electric energy.

29. The apparatus according to claim 26 or 27, further comprising a communication interface, wherein the communication interface is configured to establish a communication connection to a vehicle-mounted device.

30. The apparatus according to claim 26 or 27, further comprising a wireless communication unit, wherein the wireless communication unit is configured to establish a wireless communication connection to a vehicle-mounted device of a vehicle.

31. The apparatus according to any one of claims 26 to 30, further comprising a feedback unit, wherein the feedback unit comprises at least one of the following: a vibration feedback unit, a sound feedback unit, and a picture feedback unit, wherein
the vibration feedback unit is configured to output a vibration signal according to the user instruction;
the sound feedback unit is configured to output a sound signal according to the user instruction; and
the picture feedback unit is configured to output a picture effect according to the user instruction.

32. A computer-readable storage medium, wherein the computer-readable storage medium stores code or instructions, and when the code or the instructions is/are run, the method according to any one of claims 1 to 8 is performed.

33. A vehicle, wherein the vehicle comprises the apparatus according to any one of claims 9 to 16, or the vehicle comprises the steering wheel according to any one of claims 17 to 25.
